(19) **Europäisches Patentamt** / **European Patent Office** / **Office européen des brevets**

(11) **EP 3 258 291 B1**

(12) # EUROPEAN PATENT SPECIFICATION

(45) Date of publication and mention
of the grant of the patent:
**19.02.2020   Bulletin 2020/08**

(51) Int Cl.:
***G01S 19/02*** *(2010.01)*

(21) Application number: **16174636.7**

(22) Date of filing: **15.06.2016**

(54) **TECHNIQUES FOR TRANSMITTING AND RECEIVING GNSS NAVIGATION MESSAGES**

VERFAHREN ZUM SENDEN UND EMPFANGEN VON GNSS-NAVIGATIONSNACHRICHTEN

TECHNIQUES PERMETTANT DE TRANSMETTRE ET DE RECEVOIR DES MESSAGES DE NAVIGATION GNSS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.12.2017   Bulletin 2017/51**

(73) Proprietor: **Airbus Defence and Space GmbH 82024 Taufkirchen (DE)**

(72) Inventor: **Schotsch, Birgit Elke 81541 München (DE)**

(74) Representative: **Frenkel, Matthias Alexander Wuesthoff & Wuesthoff Patentanwälte PartG mbB Schweigerstrasse 2 81541 München (DE)**

(56) References cited:
**US-A1- 2014 258 802**

- ANGHILERI M ET AL: "GNSS Data Message Performance: A New Methodology for its Understanding and Ideas for its Improvement", ITM 2013 - PROCEEDINGS OF THE 2013 INTERNATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 27 January 2013 (2013-01-27), pages 638-650, XP056008049,

- MARCO ANGHILERI ET AL: "Reduced navigation data for a fast first fix", SATELLITE NAVIGATION TECHNOLOGIES AND EUROPEAN WORKSHOP ON GNSS SIGNALS AND SIGNAL PROCESSING, (NAVITEC), 2012 6TH ESA WORKSHOP ON, IEEE, 5 December 2012 (2012-12-05), pages 1-7, XP032322274, DOI: 10.1109/NAVITEC.2012.6423105 ISBN: 978-1-4673-2010-8

- AUBAULT-ROUDIER M ET AL: "LDPC Channel Code Optimization for a GNSS CSK-Modulated Signal", GNSS 2015 - PROCEEDINGS OF THE 28TH INTERNATIONAL TECHNICAL MEETING OF THE SATELLITE DIVISION OF THE INSTITUTE OF NAVIGATION (ION GNSS+ 2015), THE INSTITUTE OF NAVIGATION, 8551 RIXLEW LANE SUITE 360 MANASSAS, VA 20109, USA, 18 September 2015 (2015-09-18), pages 1888-1901, XP056010820,

- SUZUKI T ET AL: "Evaluation of Precise Point Positioning Using MADOCA-LEX via Quasi-Zenith Satellite System", ITM 2014 - PROCEEDINGS OF THE 2014 INTERNATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 29 January 2014 (2014-01-29), pages 460-470, XP056008107,

- EUROPEAN U: "European GNSS (Galileo) Open Service Signal In Space Interface Control Document", 20100901, no. 1.1, 1 September 2010 (2010-09-01), pages 1-206, XP007921912,

**Description**

The present invention relates to a method of transmitting a navigation message, a transmitter for transmitting a navigation message, a method of receiving a navigation message and a receiver for receiving a navigation message.

In a Galileo system the so-called I/NAV navigation message is a navigation message transmitted at frequencies E1 and E5. The original I/NAV navigation message was provided for different services, like an open service, a safety-of-life service, an external region integrity service and a search and rescue service. Some of those services reserve a significant amount of bits transmitted by the I/NAV navigation message. As a consequence, a lot of bits are unused within the I/NAV navigation message.

Performance and effectiveness of a GNSS navigation message can be derived by four essential parameters, such as the amount of content transmitted, quality of the transmitted data with respect to the targeted service, timeliness of delivery and robustness against transmission errors. Increasing the quality of the transmitted data and the amount of transmitted content affects the time that a receiver needs to receive the additional content and requires a higher transmission rate. This in consequence challenges the data robustness, since a signal with higher data rate requires more power for keeping a desired performance in terms of maximum error rate. A short time to data (TTD) requires either high data rates or a limitation of the quantity of the transmitted bits by reducing the quality of the parameters or the content to be provided. An improvement of the signal robustness requires to keep the data rate as low as possible or to introduce additional redundancy by channel coding. Consequently, this is space occupied by redundant information which could be used for useful content. That is, an ideal navigation message design should provide a solution that is optimally trading-off all the four parameters. The I/NAV navigation message is designed to provide large amounts of integrity data limiting the performance of the open service, which is used by receivers with high requirements on robustness and a time to first fix (TTFF).

The navigation message for an open service comprises at least satellite clock corrections and ephemeris parameters (CED) which is used for a computation of the satellite position and the satellite clock. This enables a computation of the position solution, in particular the first fix.

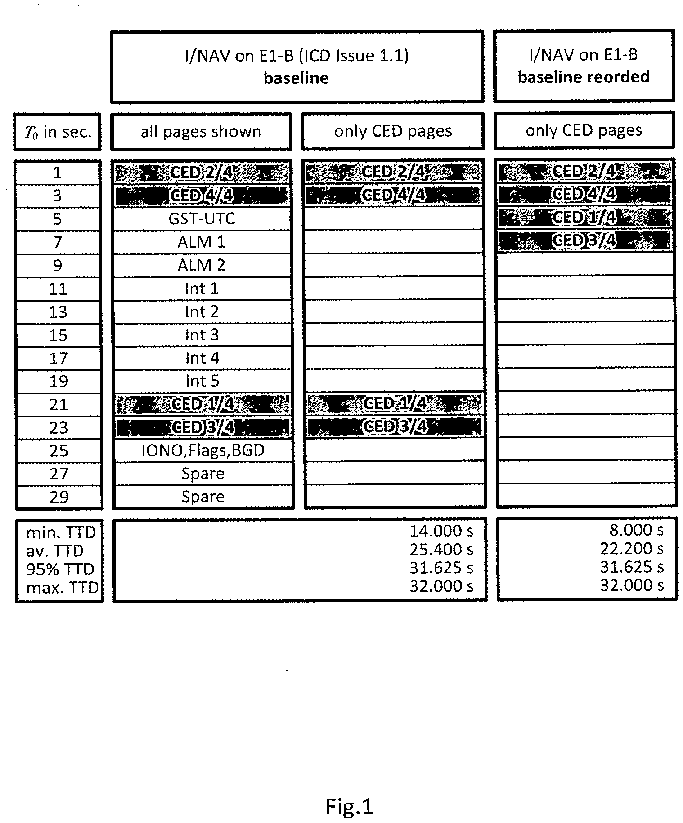

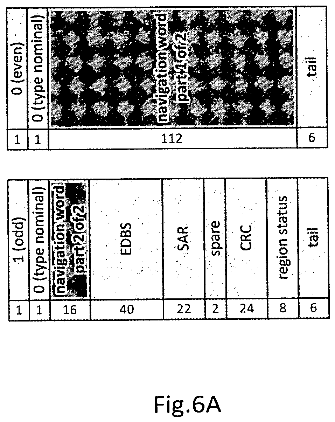

The I/NAV navigation message provides the open service to a standard receiver in a GNSS system, for example the Galileo system. The I/NAV navigation message structure is made up of 30 seconds long subframes containing 15 pages, each page is made up of an even and an odd page part lasting 1 second. The 2 seconds combination of even and odd page parts is usually defined as page. The page illustration is shown in figure 6a, wherein the upper part is the even page part and the lower part is the odd page part as indicated by the first bit. Further, a subframe structure of one of the two versions of the I/NAV navigation message is illustrated in figure 1. The pages indicated with Intl to Int5 and the spare pages are currently not used, since the integrity functionality of the Galileo open service system has become obsolete. Each page contains a data field that is also denoted as word, more specifically as navigation word. A navigation word of a specific type is labelled by a unique (navigation) word type number. The CED is transmitted in CED pages 1 to 4 which contain the respective navigation words of types 1 to 4. Usually, an error free reception of all four navigation words is necessary to recover the original CED. To the information in each page a CRC value is appended. Each page contains convolutionally encoded information and CRC value. By the checking of the latter at a receiver it is possible to tell for each page, whether the decoding of the convolutional code after receiving the navigation message has been successful or not. If the CRC fails after the decoding, it means that residual errors exist. Thus, the respective page cannot be used and is discarded. Consequently, the respective page needs to be received again. This so-called nominal subframe format as illustrated in figure 1 expects a retransmission of the same page every 30 seconds until a new set of data is available for downlink. Thus, a receiver missing a certain CED page has to wait for a long time. This increases the TTD and thus the TTFF.

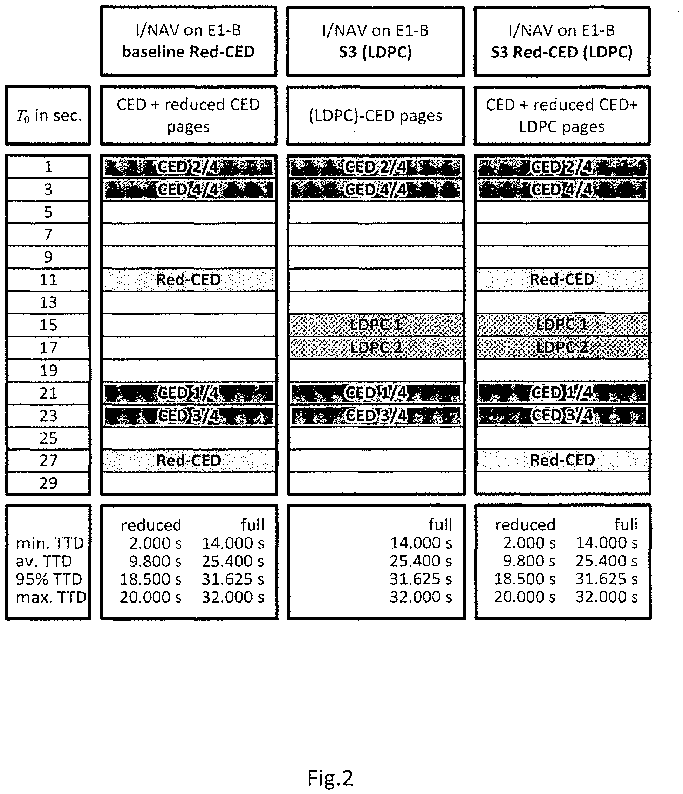

One way to improve the CED robustness is based on a low-density parity-check (LDPC) code as an outer channel code in addition to a legacy inner convolutional code. Therefore, the available space of the integrity pages and of the spare pages is used for two LDPC redundancy pages as illustrated in figure 2, mid-column. A further solution is based on a reduction of a respective data resolution resulting in so-called reduced Code and Ephemeris Data (reduced CED) which fits into one page and is transmitted, e.g. twice per subframe of the navigation message. This solution results in very low TTDs. However, the accuracy of the first position fix is quite low and the full CED still has to be acquired by receiving each of the respective CED pages. By combining the two approaches, a subframe according to the right column of figure 2 can be achieved. The LDPC redundancy pages add more error robustness to the CED and help the receiver to recover/derive the CED more reliably in harsher channel environments. Consequently, a receiver in such channel conditions does not necessarily need to wait for a repetition of a received CED page with residual errors, since the redundancy in the LDPC redundancy pages can help to correct residual errors after the convolutional decoding stage. Available LDPC decoding algorithms recover the CED information of the CED pages and report whether decoding was successful or not. Therefore, no additional CRC is required. While additional LDPC code pages add a further layer of protection to the CED pages, the TTD in error-free channels is the same as the standard scheme without LDPC redundancy pages. Anghileri M. et al. "GNSS Data Message Performance: A New Methodology for its Understanding and Ideas for its Improvement" forward error correction and block interleaving, published at the International Technical Meeting (ITM) of The Institute of Navigation, San Diego, CA, 28 - 30 January 2013.

See also "European GNSS (Galileo) Open Service, Signal In Space, Interface Control Document" published in September 2010, pages 1-206, e.g. section 4.3.2.3.

The reduced CED approach has the disadvantage of requiring a generation of reduced resolution data on board of the satellite. This generation needs modifications in a signal generator on board of the satellite, which can be quite complex.

Consequently, there is a need for a navigation message which improves certain shortcomings in terms of robustness as well as in terms of the time to first fix (TTFF) and the time to data (TTD). It is thus an object of the present invention to provide methods and devices for transmitting or receiving navigation messages which improve timely delivery of data required to obtain a first position fix under both harsh and good channel conditions.

The invention is defined by the independent claims, with preferred embodiments set out in the dependent claims.

In a first aspect, a method of transmitting a navigation message is provided. The method comprises outer RS encoding of Clock and Ephemeris data, CED. The method further comprises embedding the CED in CED navigation words and the RS encoded CED in RS CED navigation words. The method further comprises adding a Cyclic Redundancy Check, CRC, value to the CED navigation words and to the RS CED navigation words. The method further comprises embedding the CED navigation words into CED pages and the RS CED navigation words into at least one RS CED page. The method further comprises inner encoding, for example convolutionally encoding, the CED pages and the at least one RS CED page. The method further comprises transmitting the navigation message including a subframe. A subset of the inner encoded CED pages and a subset of the inner encoded at least one RS CED page are allocated within the subframe of the navigation message. The subset of the inner encoded CED pages and the subset of the inner encoded at least one RS CED page form a set of pages having the CED.

The term "a subset" may be understood as at least a subset. For example, the expression "a subset of the inner encoded CED pages and a subset of the inner encoded at least one RS CED page are allocated within the subframe of the navigation message" may be understood such that a part of the inner encoded CED pages and a part of the inner encoded at least one RS CED page are allocated within the subframe of the navigation message or may be understood such that all of the inner encoded CED pages and a part or all of the inner encoded at least one RS CED page are allocated within the subframe of the navigation message.

Each of the CED navigation words and each of the CED pages can comprise data parts representing a separate navigation word type and a separate part of the CED.

Reduced CED can be embedded in at least one other page. This may be denoted Reduced CED page. The at least one Reduced CED page can be inner encoded. The navigation message can be transmitted including the subframe. The at least one inner encoded Reduced CED page can be allocated within the subframe consecutively or non-consecutively with respect to the inner encoded CED pages and the at least one inner encoded RS CED page.

A subsequent subframe may be included in the navigation message. The subsequent subframe may be consecutive to the subframe. The subsequent subframe may comprise a different subset of the inner encoded CED pages, a different subset of the inner encoded at least one RS CED page and/or the at least one inner encoded Reduced CED page. The different subset of the inner encoded CED pages, the different subset of the inner encoded at least one RS CED page and/or the at least one inner encoded Reduced CED page can be allocated within the subsequent subframe of the navigation message. The different subset of the inner encoded CED pages, the different subset of the inner encoded at least one RS CED page and/or the at least one inner encoded Reduced CED page form another set of pages having the CED.

The navigation word types of the at least one RS CED page can be different. The navigation word types of the CED pages can be different. The navigation word types of the at least one RS CED page can match the navigation word types of the CED pages. The CED pages may be four CED pages. The number of pages within the subframe may be four to perform erasure decoding. The number of pages within the subframe may be more than four to perform outer error correction decoding. The pages within the subframe may be any combination of the at least one RS CED page and the CED pages.

The navigation message comprises the subframe. The subframe can have 30 seconds. The subframe can comprise 15 pages. Each of the inner encoded CED pages, each of the inner encoded at least one RS CED page and/or each of the at least one inner encoded Reduced CED page can have two seconds.

The inner encoded CED pages and the inner encoded at least one RS CED page and/or the at least one inner encoded Reduced CED page can be optimally distributed within the subframe, such that a time to data (TTD) and/or a time to first fix (TTFF) is reduced for a receiver.

At least two of the inner encoded CED pages can be allocated consecutively. The at least one inner encoded RS CED page can be allocated consecutively. For example, two, three, four, five, six, seven or eight inner encoded RS CED pages can be allocated consecutively or timely separated. The two, three, four, five, six, seven or eight inner encoded RS CED pages can be allocated to subsequent subframes.

The navigation message can comprise multiple subframes, for example two subframes. The inner encoded CED pages, the inner encoded at least one RS CED page and/or the at least one inner encoded Reduced CED page can be allocated within the multiple subframes of the navigation message. Each subframe can be transmitted via a different frequency and/or polarisation. One of two subframes can be transmitted via a first frequency. The other one of the two subframes can be transmitted via a second frequency. The first and second frequencies can be orthogonal frequencies. These two subframes may also be subsequent subframes.

The data parts and/or navigation word parts of the CED navigation word may sequentially include a word type, issue of data, and a part of the CED. The data parts and/or navigation word parts of the RS CED navigation word may sequentially include a word type, issue of data, and a part of the RS encoded CED. The issue of data may comprise further redundant information with respect to consecutive pages of a same type. A same type may be understood as CED pages, RS CED pages or Reduced CED pages. The word type may be deterministic. The deterministic word type forms redundant information. The redundant information of the word type and/or the issue of data can be skipped during the step of RS encoding. The issue of data can be used as redundant information during RS decoding in a receiver.

Further, the word type may be used as redundant information during RS decoding in the receiver based on its determinism.

In a second aspect, a computer program implementing the method according to the first aspect is provided.

In a third aspect, a storage device storing the computer program according to the second aspect is provided.

In a fourth aspect, a transmitter for transmitting a navigation message is provided. The transmitter comprises a first and second processing unit, an outer Reed-Solomon (RS) encoder, a CRC value generating unit, an inner encoder unit, e.g. a convolutional encoder unit, and a transmitting unit. The outer RS encoder is adapted to encode Clock and Ephemeris data, CED. The first processing unit is adapted to embed the CED in CED navigation words and the RS encoded CED in RS CED navigation words. The CRC value generating unit is adapted to add a Cyclic Redundancy Check, CRC, value to the CED navigation words and to the RS CED navigation words. The second processing unit is adapted to embed the CED navigation words into CED pages and the RS CED navigation words into at least one RS CED page. The inner encoder unit is adapted to inner encode the CED pages and the at least one RS CED page. The transmitting unit is adapted to transmit the navigation message including a subframe. A subset of the inner encoded CED pages and a subset of the inner encoded at least one RS CED page are allocated within the subframe of the navigation message. The subset of the inner encoded CED pages and the subset of the inner encoded at least one RS CED page form a set of pages having the CED. The first and second processing units can be different processing units. The first and second processing units can be the same processing unit.

In a fifth aspect, a method of receiving a navigation message is provided. The method comprises receiving a navigation message including a subframe. A subset of inner encoded Clock and Ephemeris data, CED, pages and a subset of at least one inner encoded Reed-Solomon (RS) CED page are allocated within the subframe of the navigation message. The subset of the inner encoded CED pages and the subset of the at least one inner encoded RS CED page form a set of pages having CED. The method further comprises inner decoding the inner encoded CED pages and the at least one inner encoded RS CED page. The method further comprises performing a Cyclic Redundancy Check (CRC) based on a CRC value included in the CED page and the RS CED page. The method further comprises extracting CED navigation words and RS CED navigation words from the CED pages and the at least one RS CED page. The method further comprises deriving the CED under use of outer RS decoding the CED navigation words and the RS CED navigation words.

The step of extracting can further comprise extracting the CED navigation words from the CED pages and the RS CED navigation words from the at least one RS CED page.

In a sixth aspect, a receiver for receiving a navigation message is provided. The receiver comprises a receiving unit, an inner decoder unit, a Cyclic Redundancy Check (CRC) unit, an outer Reed-Solomon (RS) decoder and a processing unit. The receiving unit is adapted to receive the navigation message including a subframe. A subset of inner encoded Clock and Ephemeris data, CED, pages and a subset of at least one inner encoded Reed-Solomon (RS) CED page are allocated within the subframe of the navigation message. The subset of the CED pages and the subset of the at least one RS CED page form a set of pages having CED. The inner decoder is adapted to inner decode the inner encoded CED pages and the at least one inner encoded RS CED page. The CRC unit performs a CRC based on a CRC value included in the CED pages and the at least one RS CED page. The processing unit is adapted to extract CED navigation words and RS CED navigation words from the CED pages and the at least one RS CED page. The outer RS decoder is adapted to derive the CED under use of RS decoding the CED navigation words and the RS CED navigation words.

In a seventh aspect, a system is provided. The system comprises the transmitter according to the fourth aspect and the receiver according to the sixth aspect.

In an eight aspect, a method comprising the method of receiving according to the fifth aspect and the method of transmitting according to the first aspect is provided.

Even if some of the aspects described above have been described in reference to the method of transmitting the navigation message, these aspects may equally be implemented or embodied in the transmitter for transmitting the navigation message. Likewise, these aspects may also apply to the method of receiving the navigation message and/or may equally be implemented or embodied in the receiver for receiving the navigation message.

Other objects, features, advantages and applications will become apparent from the following description of non-limiting embodiments with reference to the accompanying drawings, in which:

Figure 1      schematically illustrates a subframe of a navigation message, timely arranged;
Figure 2      schematically illustrates a subframe of a navigation message including the use of LDPC pages and reduced CED pages;
Figure 3A     schematically illustrates a systematic RS encoder;
Figure 3B     schematically illustrates a non-systematic RS encoder;
Figure 3C     schematically illustrates channel encoder and decoder principle, in particular the allocation of inner and outer encoding and decoding;
Figure 4      schematically illustrates a simplified conversion of CED navigation words and RS CED navigation words;
Figure 5      schematically illustrates an erasure correction principle used by the RS decoder;
Figure 6A     schematically illustrates a bit allocation in an I/NAV nominal page;
Figure 6B     schematically illustrates word type, issue of data and raw Clock and Ephemeris data allocation in an I/NAV navigation word;
Figure 6C     schematically illustrates an allocation of raw Clock and Ephemeris data to Galois field symbols;
Figure 7A     schematically illustrates partitioning of CED navigation words and RS CED navigation words into Galois field symbols before inner encoding;
Figure 7B     schematically illustrates re-indexing of CED octets and RS CED octets;
Figure 7C     schematically illustrates re-indexed CED octets and RS CED octets;
Figure 8      schematically illustrates systematic RS encoding of raw CED resulting in an RS code word and insertion of not RS encoded information;
Figure 9A     schematically illustrates CED navigation word and RS CED navigation word content analysis;
Figure 9B     schematically illustrates CED navigation word and RS CED navigation word content analysis;
Figure 10     schematically illustrates an I/NAV navigation message according to figure 1;
Figure 11A    schematically illustrates an allocation of CED pages, RS CED pages and LDPC pages within a subframe of a navigation message;
Figure 11B    schematically illustrates an optional allocation of CED pages and RS CED pages over subsequent subframes of a navigation message using different subframes;
Figure 12     schematically illustrates an allocation of CED pages and RS CED pages within a subframe of a navigation message;
Figure 13     schematically illustrates an allocation of CED pages, reduced CED pages, RS CED pages and LDPC code pages within a subframe of a navigation message;
Figure 14     schematically illustrates CED recovery failure rate over carrier to noise ratio in an AWGN channel;
Figure 15     schematically illustrates CED recovery failure rate over carrier-to-noise ratio in a two-state land mobile service channel (LMS Channel);
Figure 16     schematically illustrates CED recovery failure rate over carrier-to-noise ratio in a two-state LMS channel;
Figure 17     schematically illustrates a TTD over a page erasure probability;
Figure 18     schematically illustrates a TTD over a page erasure probability;
Figure 19A    schematically illustrates a TTD over an epoch of a first available symbol;
Figure 19B    schematically illustrates a cumulative distribution function (CDF) of the TTD according to Figure 19A;
Figure 20A    schematically illustrates a TTD over an epoch of a first available symbol;
Figure 20B    schematically illustrates a CDF of the TTD according to Figure 20A;
Figure 21A    schematically illustrates a TTD over an epoch of a first available symbol;
Figure 21B    schematically illustrates a CDF of the TTD according to Figure 21A;
Figure 22A    schematically illustrates a TTD over an epoch of a first available symbol;
Figure 22B    schematically illustrates a CDF of the TTD according to Figure 22A;
Figure 23A    schematically illustrates a TTD over an epoch of a first available symbol;
Figure 23B    schematically illustrates a CDF of the TTD according to Figure 23A;
Figure 24A    schematically illustrates a TTD over an epoch of a first available symbol;
Figure 24B    schematically illustrates a CDF of the TTD according to Figure 24A;
Figure 25A    schematically illustrates a TTD over an epoch of a first available symbol;
Figure 25B    schematically illustrates a CDF of the TTD according to Figure 25A;
Figure 26A    schematically illustrates a TTD over an epoch of a first available symbol;
Figure 26B    schematically illustrates a CDF of the TTD according to Figure 26A;

Figure 27A    schematically illustrates a TTD over an epoch of a first available symbol;

Figure 27B    schematically illustrates a CDF of the TTD according to Figure 27A;

Figure 28A    schematically illustrates a TTD over an epoch of a first available symbol;

Figure 28B    schematically illustrates a CDF of the TTD according to Figure 28A;

Figure 29     schematically illustrates a method according to an embodiment of the present invention;

Figure 30     schematically illustrates a transmitter according to an embodiment of the present invention;

Figure 31     schematically illustrates a method according to an embodiment of the present invention; and

Figure 32     schematically illustrates a receiver according to an embodiment of the present invention.

In the following description, for purposes of explanation and not limitation, specific details are set forth, such as specific implementation details, in order to provide a thorough understanding of the present disclosure. It will be apparent to one skilled in the art that the present disclosure may be practiced in other embodiments that depart from these specific details. For example, although the present disclosure is mainly described with reference to the I/NAV navigation message as a specific example for a navigation message, the present disclosure may be practiced with other, for example future, navigation messages having a similar structure.

Those skilled in the art will further appreciate that functions explained herein below may be implemented using individual hardware circuitry, using software functioning in conjunction with a programmed microprocessor or a general purpose computer, using an Application Specific Integrated Circuit (ASIC) and/or using one or more Digital Signal Processors (DSPs). It will also be appreciated that when the present disclosure is described as a method, it may also be embodied in a computer processor and a memory coupled to a processor, wherein the memory is encoded with one or more programs to cause the processor to perform the methods disclosed herein when executed by the processor.

The features described and/or illustrated in the drawings may form the subject-matter disclosed herein alone or in any combination with each other. The dimensions and proportions of components or parts shown in the figures are not necessarily to scale. Rather, these dimensions and proportions may differ from illustrations in the figures and implemented embodiments.

The functional and operational aspects described herein are only for better understanding of the structure of the disclosure described herein. They do not limit the disclosure to the embodiments described in the following. The figures are partially schematic. Properties and effects are shown enlarged in part in order to clarify the functions, active principles, embodiments and technical characteristics. Every operation, every principle, every technical aspect and every feature that/which is disclosed in the figures or in the text can be combined with all claims, each feature in the text and in the other figures, other modes of operation, principles, technical refinements and features that are included in the disclosure, or result from it, so that all possible combinations can be assigned to the devices and methods described herein. All features disclosed herein can be claimed in isolation from or in combination with all other features disclosed herein.

Figure 1 schematically illustrates three different illustrations of a subframe of a navigation message. The first column illustrates a time scale, which indicates that each page has two seconds of time. The second column illustrates the subframe of the navigation message. The third column illustrates only CED pages within the subframe of the navigation message. And the fourth column illustrates reordered CED pages within the subframe of the navigation message. The navigation message in figure 1 is illustrated to be an I/NAV navigation message transmitted via the E1-B frequency which does not state a limitation to the E1-B frequency, such that it can also be the E5B-I frequency. Usually the navigation messages are transmitted via the E1 and E5 frequencies. The Clock and Ephemeris data CED are transmitted in pages, each page having a word type from 1 to 4. The illustrated nominal subframe format has an arrangement of 15 pages in a 30 seconds time frame. Further, retransmission of the same CED page every 30 seconds is performed until a new set of data is available for downlink. Thus, a receiver missing a CED page of a certain word type is not able to derive the corresponding CED, such that the receiver has to wait for at least another 30 seconds. This leads to a high time to receive the CED which is denoted time to data TTD. The subframe of the navigation message in figure 1 comprises consecutively CED 2/4, CED 4/4, GST-UTC, ALM1, ALM2, Int1, Int2, Int3, Int4, Int5, CED 1/4, CED 3/4, (IONO, Flags, BGD), and two spare pages filled with dummy messages. The CED pages of word types 1 to 4 comprise the whole information about Clock and Ephemeris correction data. The ALM1 and ALM2 comprise almanac data. The almanac data is a reduced precision subset of Clock and Ephemeris parameters of the active satellites in orbit. Also a reduced set of clock correction parameters is provided in the almanac for each satellite including a time of applicability of the almanac data. This time of applicability is referenced to the almanac reference week. A term of the reference week consists of two bits which is a modular 4 binary representation of the system week number. Additionally, a predicted satellite health status is provided for each of the satellites giving indications on the satellites signal components health and navigation data health. The GST-UTC page comprises information about a week number and a time of week. The Intl to Int5 pages can be considered as spare pages, since they are not applicable for the open service. The (IONO, FLAGS, BGD) page comprises information about broadcast group delay and ionospheric correction. Since the integrity functionality of the Intl to Int5 pages in the open service has become obsolete, there exist unused pages. One example to use spare pages is schematically illustrated in figure 2.

Figure 2 schematically illustrates three different arrangements of pages within a subframe of a navigation message. In the second column, reduced CED pages are allocated within the subframe of the navigation message. The reduced CED pages comprise information which is reduced in data size. In the third column, LDPC pages are used within the subframe of the navigation message. The LDPC pages, so-called LDPC redundancy pages, add more error robustness to the CED and support the receiver in order to recover the information transmitted in the CED pages and LDPC redundancy pages. Error robustness is important in harsher channel environments. Consequently, a receiver in bad channel conditions does not necessarily need to wait for a repetition of a missing CED page, since the redundancy in the additional LDPC redundancy pages can help to correct residual errors after decoding of the inner channel code. The available LDPC decoding algorithms then can recover/derive the CED from the CED pages and the LDPC redundancy pages. In the fourth column, a combination of the allocated reduced CED pages and LDPC pages is shown. The reduced CED pages have the advantage of leading to very low TTD. The LDPC approach has the advantage of adding more error robustness to the CED. For optimal erasure correction as well as optional error correction, the present invention makes use of a Reed-Solomon code. This is introduced in the following figures. The time required to obtain a first fix is defined as the time to first fix (TTFF) and it consists of several addends, i.e. $T_{FF} = T_{warm\ up} + T_{acquisition} + T_{tracking} + T_{data} + T_{PVT}$, where

- $T_{FF}$      Time to first fix (TTFF)
- $T_{warm\ up}$      Receiver warm up time
- $T_{acquisition}$      Time for acquiring the signal
- $T_{tracking}$      Tracking time
- $T_{data}$      Time to retrieve the CED (also denoted time to data (TTD))
- $T_{PVT}$      Time to calculate a first PVT solution.

The so-called time to data (TTD), i.e. the time required to receive the clock and ephemeris data (CED), constitutes a major factor in the time to first fix (TTFF). More precisely, it is defined as the time difference between the epoch at which the first encoded bit is recovered from the received signal and the epoch at which the complete CED is available.

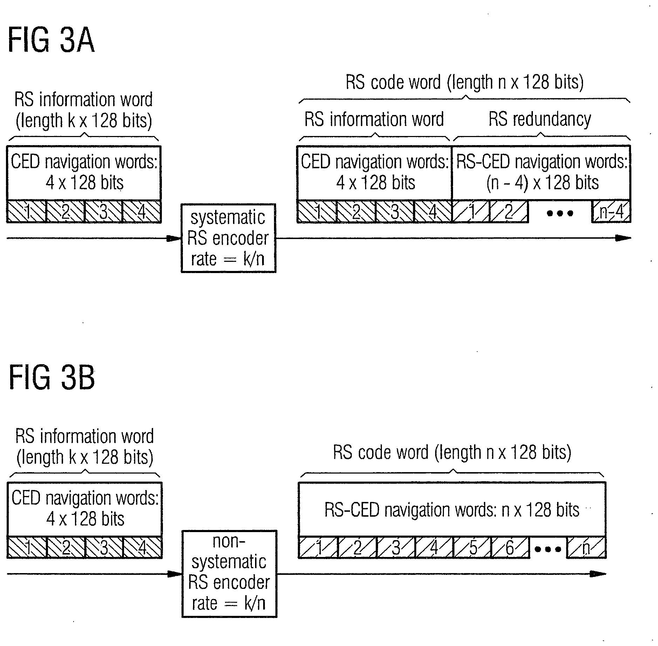

Figure 3A schematically illustrates a schematic RS encoder showing the systematic allocation of bits. An RS information word with a length of k x 128 bits, which comprises the k CED navigation words each with a length of 128 bits, is fed to the systematic RS encoder with a rate of k/n, which leads to an RS code word with a length of n x 128 bits. The RS code word then consists of two parts, the first part being the RS information word with k x 128 bits and the second part being the RS redundancy word with (n-k) x 128 bits. The RS code word consists of n words, k of which are identical to the k CED words and n-k are denoted as RS CED words. This is only a schematic description of the actual RS encoding. A more detailed description of the actual encoding process is provided later on. For backwards compatibility reasons, a systematic coding scheme is used in order to transmit also unaltered nominal CED pages. The size of the RS redundancy word of the RS code word can be adjusted by using a higher or lower code rate. For example, two or four RS redundancy parts each consisting of 128 bits are used. Another possibility of generating an RS code word is schematically illustrated in figure 3B.

Figure 3B schematically illustrates a non-systematic RS encoder with code rate k/n. The RS information word with k x 128 bits comprising the raw CED, the raw CED being also referred to as CED in the present disclosure, is encoded via the code rate k/n to an RS code word with length n x 128 bits comprising an RS redundancy word with n x 128 bits.

The so-called RS codes have both erasure and error correcting properties. Erasure correction can be applied as soon as parts of information can be labelled reliable or unreliable. Such a reliability flag is given in terms of a CRC, for example if the CRC reports errors in a page after the inner decoding stage, often Viterbi decoding is applied, this page is discarded or erased. In a state of the art scheme, a CED page containing errors is not used at the receiver. Instead the receiver is required to wait for the reception of the same page in the next subframe. With RS CED pages, this is not necessary, as an RS CED page can act like a so-called joker page. For example it can replace any of the CED pages. So the receiver just needs to wait for the next RS CED/joker page. Since the receiver can recover/derive the CED from four RS CED pages, the RS code can also be used in a non-systematic way.

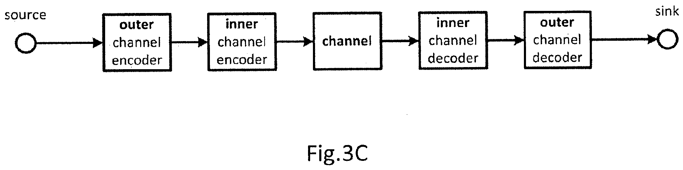

Figure 3c schematically illustrates a channel encoding and decoding principle. First, the source provides information, which is encoded at an outer channel encoder and then encoded at an inner channel encoder, transmitted via a channel and decoded at an inner channel decoder and finally decoded at an outer channel decoder. Final output is the information derivable from the sink, which was first provided at the source. In the current setting, an RS code acts as outer code and a convolutional code as inner code.

RS codes are known to be optimal erasure correcting codes. The property in which this optimality is based is denoted maximum distance separability MDS. When original data consisting of k data symbols is encoded into n coded symbols and the receiver obtains exactly k of the n encoded symbols, the receiver is able to recover/derive the original k data symbols. Non-MDS codes cannot guarantee the recovery from exactly k received symbols, they may need more. Erroneous symbols are assumed to be discovered as such by an external mechanism, e.g. a CRC, and measures are taken thereupon to remove or erase such erroneous symbols. Thus, whenever a symbol or information entity is said to be received in an erasure correction setting, it means that it is correct, not received means it is erased or it has not arrived yet. However, the latter case is equivalent from the perspective of a recovery algorithm. This means that if the length of the information word is k (here: k is 4 information units not bits) and the length of the produced code word is n information units, say n = 8, then the reception (without CRC errors) of exactly k different encoded information units is sufficient to recover/derive the original k = 4 information units. A suboptimal erasure correcting code would require the reception of k or more different encoded information units.

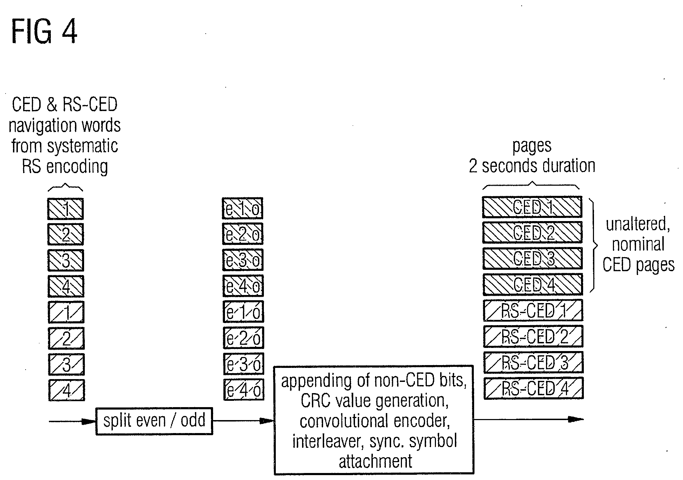

Figure 4 schematically illustrates a simplified conversion of raw CED and RS encoded CED words to pages. This conversion is also referred to as embedding CED and RS encoded CED words into pages in the present disclosure. The converted pages are separated into a part comprising CED pages and a part comprising RS CED pages. The CED pages are compliant with the standard. The information on the CED is split in even and odd word parts, wherein the different CED and RS CED words can be transmitted independently on each frequency for the case of two frequencies E5B and E1.

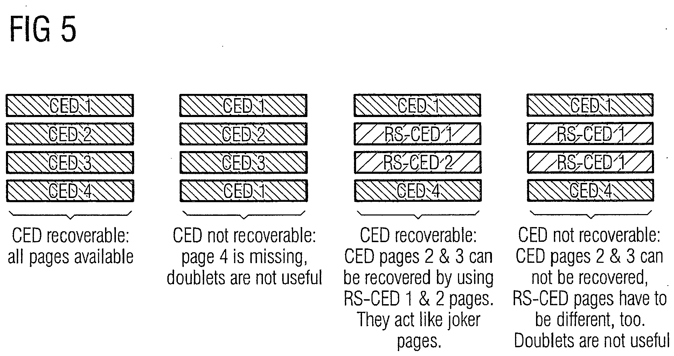

Figure 5 schematically illustrates examples for erasure correction of recoverable and unrecoverable CED and RS CED page constellations. Doublet pages can be considered as one page, as they do not contain any new information. Provided that full CED information is equivalent to four CED pages, a receiver just needs to collect the set of four different CED or RS CED pages in order to derive the CED. All CED pages or RS CED pages used for erasure correction need to be error free after inner decoding, for example the CRC for each used page needs to be successful. If the CRC fails, the respective page is discarded at least for erasure correction. Still, it may be used for RS error correction. The first and third columns of figure 5 show recoverable CED under erasure decoding, because the underlying pages comprise four different pages, i.e. there are no doublet pages that comprise the same information. The second and fourth columns comprise constellations, where the CED is not recoverable, because at least one of the pages is doubled, so there are effectively only three useful pages. If after inner decoding there are still residual errors in a page, this page cannot be used for erasure correction decoding, but it can be used for error correction decoding, since the redundancy in the at least one RS CED page can be used to correct those residual errors. In order to perform error correction, a receiver needs to collect at least five CED pages or RS CED pages, of which some or all may contain residual errors after inner decoding. If at least four CED or RS CED pages without residual errors have been received, erasure decoding should be applied. RS codes are burst error correcting codes and therefore work well in combination with a convolutional code, since the Viterbi decoding algorithm which is normally applied as inner decoder to decode convolutional codes, produces burst errors in case of a decoding failure. Furthermore, it is important to keep in mind that RS decoding has a very low probability of not detecting errors and as such can validate the decoded information. Consequently, it is not required to append a second CRC to the CED and RS CED to report the failure or success of RS decoding.

Figure 6A schematically illustrates a bit allocation in a nominal page before inner encoding. Figure 6A shows the size of the different fields into which the even and odd page part are divided. This information is indicated by the first bit of the upper and the lower page part. The following type field was designed for informing the receiver whether the page parts are parts of alert pages according to the original Galileo integrity concept or page parts of a nominal page. Here only nominal pages are considered. The two navigation word fields have a size of 128 bits in total and contain navigation data. The fields EDBS and SAR comprise environmental data bank system data EDBS and search and rescue SAR data, respectively. The CRC field is used to check the validity of the received data and protects all the data fields with exception of the region status and the two tail bits fields. Each 120 bit long page part is encoded with a rate ½ convolutional code into a sequence of 240 symbols including the 6 tail bits for terminating the sequence in a known state to improve the decoding performance. After encoding, a block interleaver is applied to the 240 symbols and a 10 symbols synchronisation pattern is put in front of them, thus forming a 250 symbol page.

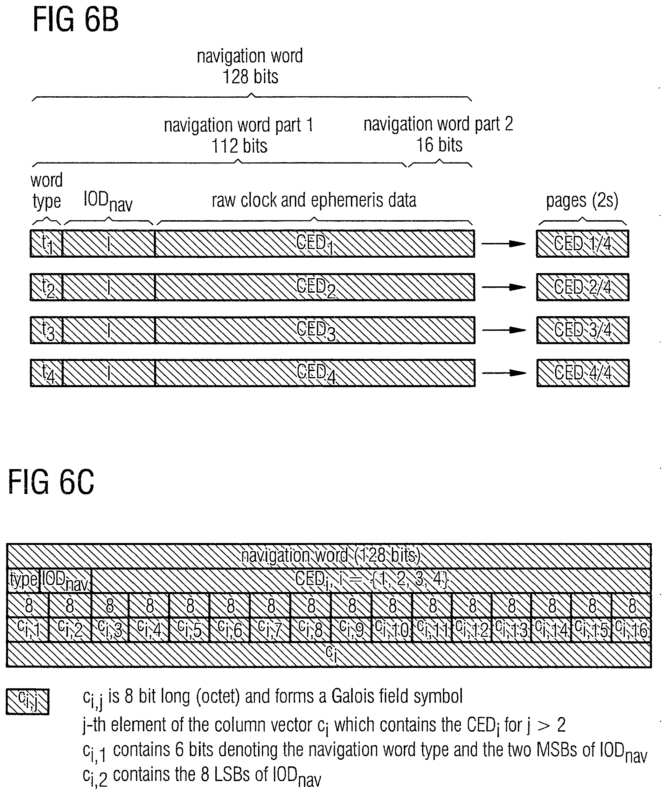

Figure 6B schematically illustrates raw CED allocation to a CED navigation word and embedding the data into the navigation word structure. The navigation word type, the issue of data and the raw CED build a set of data parts. After convolutional encoding, interleaving and appending a synchronisation pattern, the final CED pages are created on the right side of the figure. The issue of data ($IOD_{NAV}$) field (10 bits) is equal for the same CED batch formed by $CED_1$, $CED_2$, $CED_3$ and $CED_4$ as illustrated. Each CED batch comprises the whole CED. CED words from different batches cannot be used together. The current CED batch remains constant until a new set or batch of CED data is available for downlink. For one CED batch, the $IOD_{NAV}$ field is equal for each CED word. These equal $IOD_{NAV}$ fields can therefore be interpreted as repetition encoded.

Figure 6C schematically illustrates an allocation of CED navigation words to Galois symbols (here 16 octets). The CED navigation word is fragmented into octets, which are used as Galois field symbols over a Galois extension field $F_Q$, with $Q = P^M$, where P is prime and M is $\in \mathbb{N}$. The used Galois field is $F_{256}$, i.e. P = 2 and its symbols consist of M = 8 bits. The reasons for choosing octets are first the divisibility of the data length (128 bits) by 8. Second it is a natural choice in byte-oriented systems. The vector $C_i = C_{i,1} ... C_{i,16}$ contains the CED navigation word of word type i and its 16 elements are symbols from $F_{256}$. Note that M = 16 bits is also a feasible choice. The number of such Galois field symbols would then be reduced to 8.

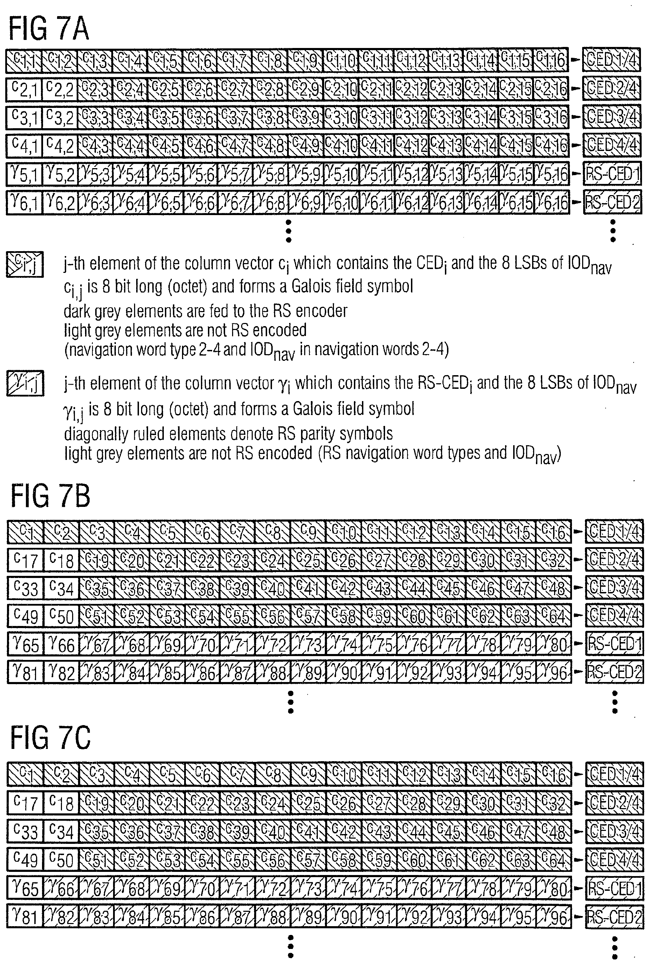

For systematic RS encoding of the raw CED the partitioning in figure 7A is used. The elements $C_{i,1}$ and $C_{i,2}$ with i greater than 1 and the elements $\gamma_{j,1}$ and $\gamma_{j,2}$ with j greater than or equal to 4 are not RS encoded, since the navigation word type is contained in the first 6 bits and that is required in unmodified form after inner decoding in order to apply the suited outer decoding settings for the respective types of words. The remaining elements $C_{i,j}$ form the RS information word and the remaining elements $\gamma_{i,j}$ form the RS parity symbols. Without loss of generality the navigation word type 1 together with the first occurrence of the $IOD_{NAV}$ field is RS encoded to stretch CRC-like functionality of the RS code over one instance of the $IOD_{NAV}$ field, the word type 1 is merely included into the RS information word due to the fact that Galois field symbols (here octets) cannot be split in the current context and two bits of the $IOD_{NAV}$ field are contained in the same octet as the word type. Furthermore, the repeated $IOD_{NAV}$ fields are contained in the RS uncoded part, since the repetition of this field is exploited by other means. Note that the symbols $C_{1,1}$ and $C_{i,2}$ are also available in unmodified form as the used RS code is systematic, i.e. the RS information word is part of the RS code word, since the RS parity part is merely appended. A non-systematic code would completely transform the RS information word, such that it is not visible in the RS code word anymore. A systematic code is necessary if backwards compatibility shall be granted. In order to simplify the notation, the octets are reindexed as illustrated in figure 7B.

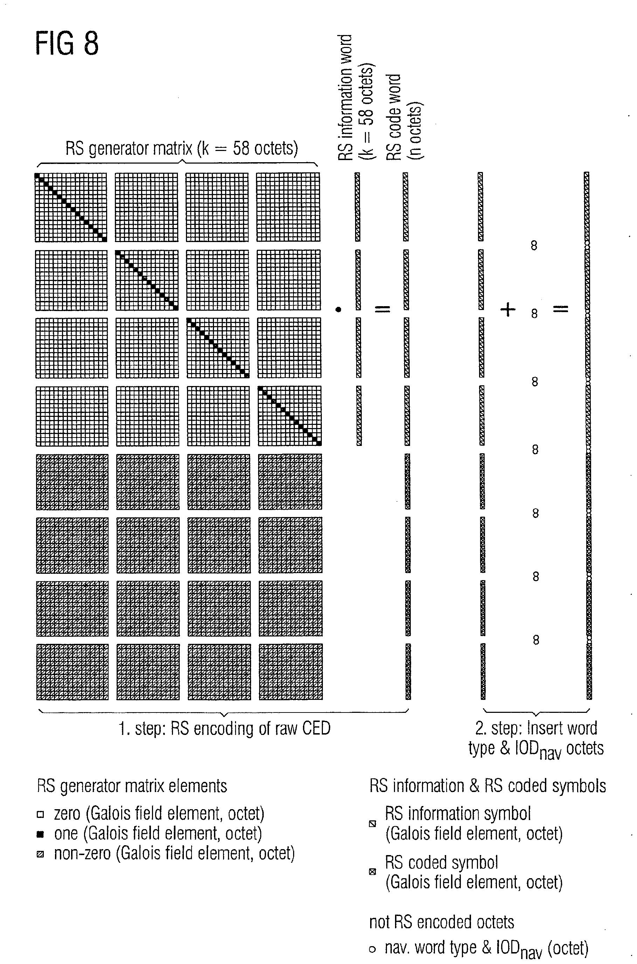

Figure 7B schematically illustrates reindexed CED navigation word octets and RS CED navigation word octets. The column vectors C and y are defined as $C = (C_1^T ... C_4^T)^T$ and $y = (\gamma_1^T, \gamma_2^T ...)^T$, wherein $C_i^T = (C_{i,1}, C_{i,2}, ..., C_{i,16})$ and $\gamma_i^T = (\gamma_{i,1} ... \gamma_{i,16})$ respectively. The elements $C_{i,j}$ with i = {1, 2, 3, 4} and j = {1, 2, ...} are continuously reindexed by a single index S = {1, 2, 3, ...}. The CED navigation words can therefore be written into a single vector $C = (C_1 ... C_{64})^T$. Thus, leading to the RS information word $C_{RS} = (C_1, C_2, ..., C_{16}, C_{19}, ..., C_{32}, C_{35}, ..., C_{48}, C_{51}, ..., C_{64})^T$. Moreover, a systematic RS generator matrix G being element of $F_{256}^{n \times k}$ is required, wherein the RS information word length is k = 58 octets and the RS code word length is n ≤ Q-1 octets, i.e. n ≤ 255. The RS information word $C_{RS}$ is then RS encoded by using the generator matrix G yielding the RS code word $\gamma_{RS} = G * C_{RS} = (C_1, C_2, ..., C_{16}, C_{19}, ..., C_{32}, C_{35}, ..., C_{48}, C_{51}, ..., C_{64}, \gamma_{67}, \gamma_{68}, ..., \gamma_{80}, \gamma_{83}, ..., \gamma_{96}, \gamma_{99}, ..., \gamma_n)^T$. After RS encoding, the word type and $IOD_{NAV}$ octets are inserted, resulting in $y = (C_1, C_2, ..., C_{64}, \gamma_{65}, \gamma_{66}, ..., \gamma_n)^T$. To further illustrate this process, the RS encoding and insertion procedure is illustrated in figure 8.

Figure 8 schematically illustrates systematic RS encoding of the CED navigation words, following the description according to figure 7A and 7B. Into the resulting code word the word type and $IOD_{NAV}$ octets are inserted. The gaps within the matrix and the RS information as well as the code word is left at those positions where the insertion takes place. These gaps are for illustrative purposes only, as they indicate positions at which to insert the unencoded word type and (partial) $IOD_{NAV}$ octets. The chosen parameters of the RS code (k = 58, n ≤ 255) and 14 RS symbols per RS CED navigation word result in 14 different RS CED navigation words, i.e. k + 14 * 14 = 58 + 196 = 254 = n. This is a total of 4 + 14 = 18 different (RS) CED pages, counting also the four original (systematic) CED pages. This allows to use six or eight different CED/RS CED pages in two or three adjacent subframes, respectively, or a different set of (RS) CED navigation pages across the two frequencies E1-B and E5B. Using a different set of pages in each subframe reduces the probability of receiving unwanted doubled pages and speeds up the CED reception. The dual frequency extension promises TTD reduction and robustness improvement. Considering a scheme with 8 pages consisting of CED and RS CED pages, or a scheme where pages are alternated only between two neighbouring subframes, the error correction capability of the RS code can be slightly improved if the octets $\gamma_{66}, \gamma_{82}, ...$ also contain RS parity symbols instead of the 8 $IOD_{NAV}$ LSBs. Then, the RS CED navigation words would contain 15 RS symbols which would result only in 13 different RS CED pages, i.e. 17 pages in total. For both six or eight page schemes 17 pages would only suffice for two neighbouring subframes, since 17/6 and 17/8 make two (rounded down). If the number of available new navigation word types is greater than 13 or 14, it can be considered to increase the Galois field size. The optimal erasure correction capability of RS codes can be exploited, since an inner convolutional code and a CRC is used, where the latter indicates whether a page could be correctly decoded or not, for example by an inner decoder. The CRC emulates an almost ideal erasure channel after the real channel and inner decoder. A page is considered erased, for example it is not used, if the CRC reports an error. A page is also regarded as erased if it has not been received yet, for example if it is transmitted only at a later point in time. If a page is marked as erased because the CRC flags residual errors after inner decoding, this means that it is not used in the so-called baseline's scheme. It is also not used for erasure decoding in the outer decoding stage, but it can still be used for the correction of residual errors in the outer decoding stage.

The redundant RS CED navigation words are created from the original set of four CED navigation words by means of RS encoding. The RS CED navigation words and consequently the at least one RS CED page have the ideal property that from any constellation of exactly four CED or RS CED pages, the original set of four CED pages can be derived/recovered. An RS CED page acts like a so called joker page, the four pages used for erasure decoding just have to be different. For erasure decoding, the received pages also need to be error-free after inner decoding (no CRC error). The standard requirements of receiving all CED pages to recover/derive the complete CED can therefore be loosened to the RS requirement or more precisely the MDS erasure correction requirement of receiving a set of any four different CED or RS CED pages. Since the MDS requirement can be fulfilled in a much shorter amount of time, the RS coding approach significantly reduces the TTD. This applies to the case of channel environments being both bad and good. In contrast thereto, the LDPC redundancy pages are only useful if the channel is bad. In good channel conditions the TTD performance is equal to the standard TTD performance under good channel conditions. Moreover in the RS coding setup, if, for example one CED related page is damaged, the next received such page can replace it as long as one obtains a set of four different pages. This already improves the robustness against channel noise and fading, and allows a faster CED reception/derivation. If a current channel quality is such that the inner decoder fails for one or another CED related page, time would be wasted by waiting for a correct CED related page. Since the outer RS code can also be operated in error correction mode, it is not necessary to wait such a long time. The capability of RS burst error correction is very useful, as the Viterbi decoding algorithm, often applied for decoding convolutional codes and here applicable as inner decoder, produces burst errors when it fails. Upon the reception of five words with one or all of them containing residual errors after inner decoding, the RS decoder can attempt to correct these errors. With a plain minimum distance decoder, this amounts to an error correction capability of $e = \text{floor}((r-k)/2)$ erroneous symbols. $k$ denotes the number of CED octets that are fed to the RS encoder, i.e. the length of the RS information word , e.g. $k=58$ as in the example above, and $r$ denotes the number of received CED and RS CED octets and $e$ denotes the number of correctable octet errors (or Galois field symbols). An octet is considered erroneous if it contains at least one bit error. Within additional received CED or RS CED pages, the number of received octets raises accordingly by 14 to 16 octets, depending on the setting and the word type. Since the position of pages in the subframe structure may vary, each page needs a unique identifier, the word type. The word type field (6 bits) in a navigation word has to be directly accessible after inner decoding in order to apply the correct outer decoding setting, since this differs for each word type. Therefore, the outer code may not change this field. Residual errors in the type field are thus especially harmful, since an error in this field results in a complete misinterpretation of the respective page's content. In the baseline scheme such a page is discarded (CRC failed), yet for the schemes with outer error correction this page is further used. However, with sufficiently high probability, the false word type contributes a large number of bit errors or Galois field symbol errors to the set of received CED related pages. For RS erasure decoding it is an important fact that the type fields are deterministic which is exploited for erasure decoding. So, the decoding system just has to fill in the respective information, i.e. data type 1, even if the page of word type 1 is not among the received pages. The information of the 2 $MSB_S$ in the $IOD_{NAV}$ can also be found in the other navigation words as well as the 8 $LSB_S$ or it can be decoded, depending on the used scheme.

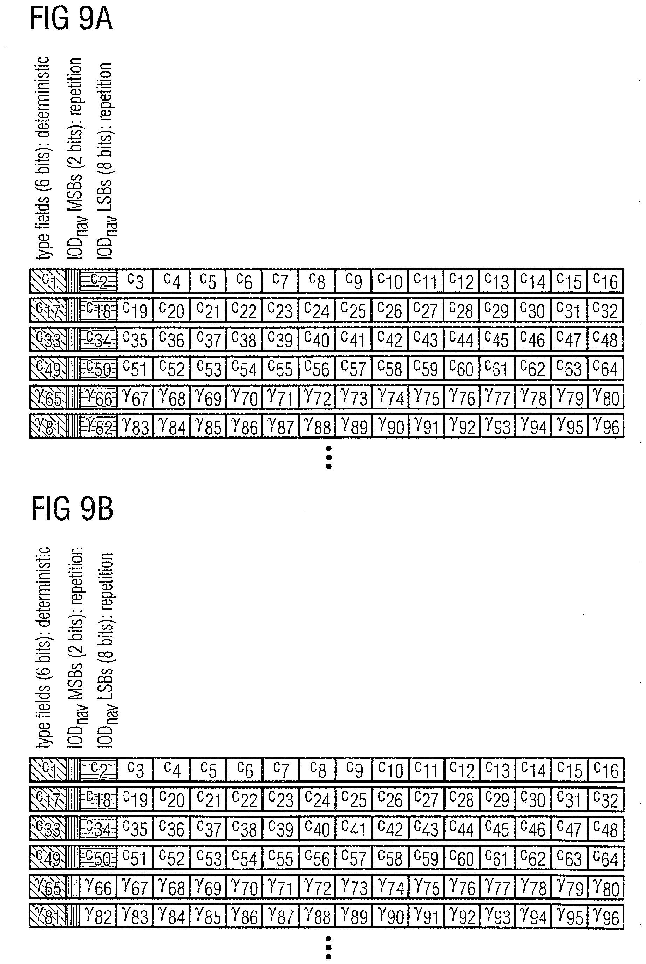

Figure 9 schematically illustrates a brief CED and RS CED navigation word content analysis, which is essential particularly for exploiting the optimal erasure correction capability of the RS decoding stage. The type field is deterministic, while the $IOD_{nav}$ fields can be interpreted as repetition encoded. The $IOD_{nav}$ fields are equal for all CED navigation words of the same batch. Depending on the chosen scheme, this also applies for the RS CED word fully or partially.

    a) If the RS CED navigation words contain the full $IOD_{nav}$ in uncoded form, the equality is provided across different (RS) CED navigation words as well. This is schematically depicted in Figure 9A; and
    b) If the RS words contain an RS coded symbol in place of the 8 LSBs of $IOD_{nav}$ only the 2 $IOD_{nav}$ MSBs are equal across different (RS) CED navigation words. This is schematically depicted in Figure 9B.

For successful erasure correction decoding using MDS codes the number of received symbols has to be equal to (but it is allowed to be greater than) the number of information symbols. In the above example $k=58=16+3\times14$. Without loss of generality, the first CED navigation word is completely RS encoded and in the remaining CED navigation words the type field as well as the $IOD_{nav}$ field are not part of the RS information word. In case a) the RS CED navigation words also only provide 14 RS redundancy symbols or octets. So by plain erasure decoding, a received set of four pages not containing word type 1 provides only $4\times14=56$ symbols and is therefore by its own not sufficient to recover the CED words, so the reception of another (RS)-CED word would be necessary. However, in case a) the $IOD_{nav}$ field is available in all (RS)-CED words and can therefore be merely copied to the respective positions. Moreover, the types are deterministic, so the field of word type 1 is also fix and known. Consequently, the word type 1 together with the copied $IOD_{nav}$ field provide the two first symbols in CED word type 1 and thus reduce the number of additionally required RS symbols (this refers to systematic and redundancy symbols) from 58 to 56.

Erasure decoding can also be performed by solving a consistent system of linear equations that results from considering only the so-called reception generator matrix $G_r$ that consists only of those lines of the original generator matrix G of which the corresponding encoded symbols have been received. As soon as k encoded symbols have been received, the matrix $G_r$ is square and being a subset of k rows of an MDS code's generator matrix, it is guaranteed to have full rank. So the consistent system of linear equations $\gamma_{RS,r} = G_r * C_{RS}$ has to be solved, $\gamma_{Rs,r}$ being the vector of received coded symbols and $C_{RS}$ the original information word, unknown to the receiver, which shall be recovered. In the above example in case a) the vector of received symbols from 4 received RS CED pages would have a length of only 56 symbols, whereas the length of the information word $C_{RS}$ is k=58. By providing side information as it is the case with the word type (a priori known, since it is fix) and $IOD_{nav}$ (known from repetitions in the received RS CED navigation words) two corresponding unknown symbols are already solved for. These can be used to solve the remaining system of k-2 equations completely, e.g. by backward insertion.

In case b) each RS CED word contains one RS symbol more, i.e. 15, as depicted in Figure 9B. The reception of for instance four RS CED pages provides 4*15 = 60 symbols which is greater than k=58, so recovery is possible. Whereas the reception of for instance CED pages of word types 2, 3 and 4 and one RS CED page provides only 3*14+15 = 57 symbols, which is one less than required. However, the same principle as above applies here as well: The word type used for RS encoding (here word type 1) is known a priori and the 2 $IOD_{nav}$ MSBs are repeated in every RS CED and CED word, so that symbol or octet is known and the 8 $IOD_{nav}$ LSBs are provided in the other CED words, here CED words 2, 3 and 4. So the erasure recovery from a seemingly underdetermined system of linear equations is possible, since the missing information can be provided either from a priori knowledge or by exploiting the multiple occurrence of (parts of) the $IOD_{nav}$ field and the system of linear equations can be solved.

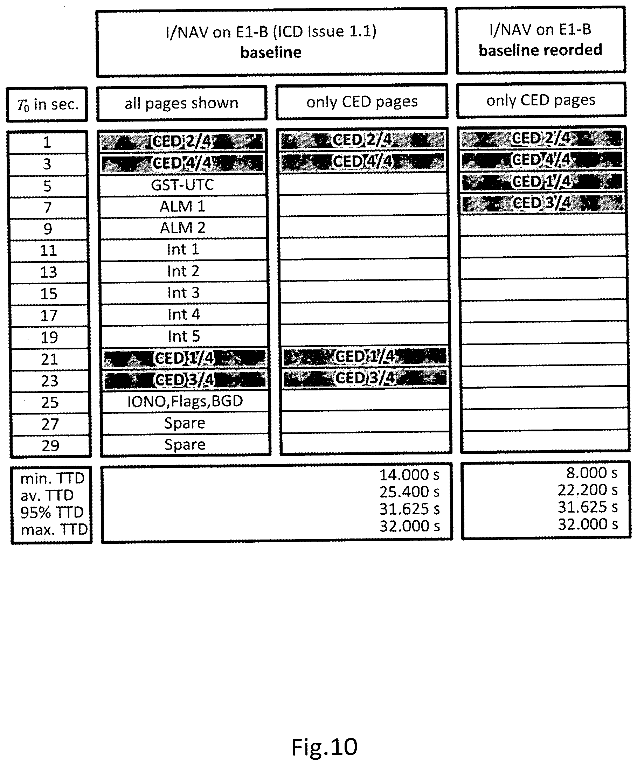

The following figures 10 to 13 represent subframe schemes designed to reduce the TTD and to improve the CED robustness against channel noise and fading. Schemes with certain commonalities are grouped together in one figure.

Figure 10 schematically illustrates the so called baseline I/NAV navigation message and reordered subframe schemes that contain only the CED pages and no further redundancy pages. The left column of figure 10 shows the time in seconds with respect to the beginning of a subframe. In the second column, nominal page of all word types are shown, while in the third column only the CED pages are highlighted. The setup refers to the baseline scheme. As we are only interested in recovering/deriving the CED, only the relevant pages are depicted in the following.

As a first figure of merit, the TTD (minimum, average, 95% confidence, maximum) is provided at the bottom of each figure for a noiseless channel.

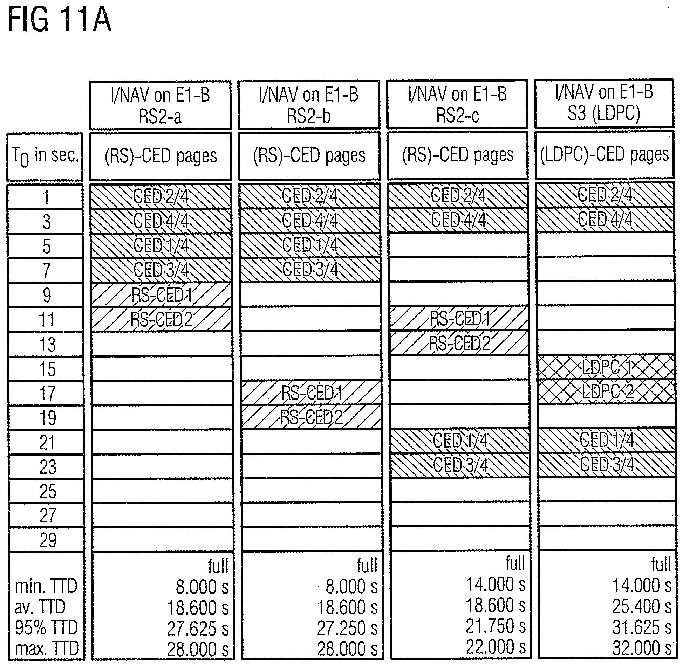

Figure 11A schematically illustrates different page allocations within a subframe with four CED pages and two RS CED pages. Further, figure 11A shows the TTD performance under ideal conditions. The illustrated subframe schemes contain two additional pages comprising redundancy from an outer channel code (LDPC or RS code), such that the six CED related pages are contained within one subframe.

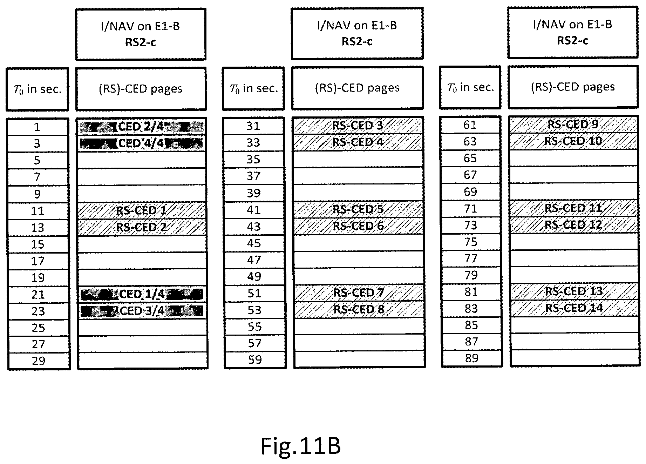

Figure 11B schematically illustrates a possible realisation of page allocation RS2-c, as depicted in Figure 11A, over subsequent subframes, where each subframe contains a different set of CED related pages. In place of the four CED pages and the two RS CED pages labelled RS CED 1 and RS CED 2 of the first subframe, the subsequent subframes contain only RS CED pages.

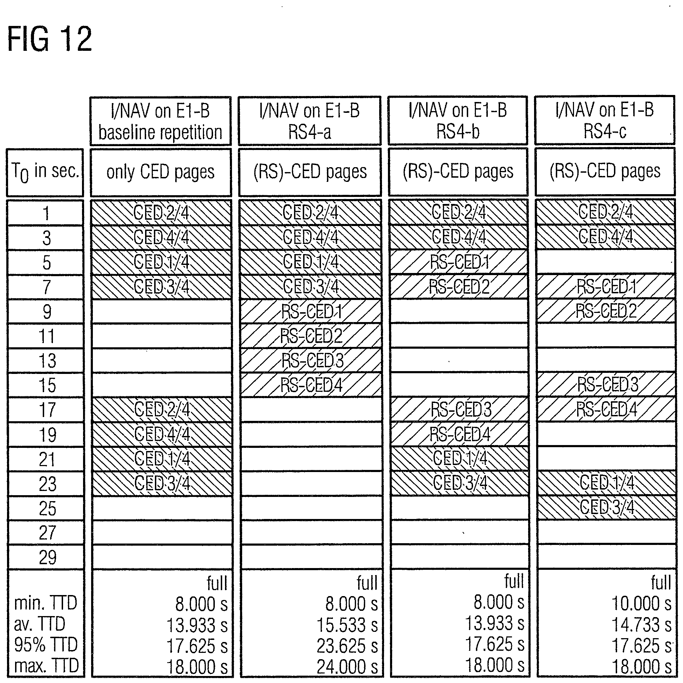

Figure 12 schematically illustrates different page allocations within a subframe with four CED pages and four RS CED pages. Further, figure 12 shows the TTD performance under ideal conditions. The illustrated subframes comprise four additional pages containing redundancy from an outer channel code (repetition code or RS code). This yields eight CED related pages per subframe.

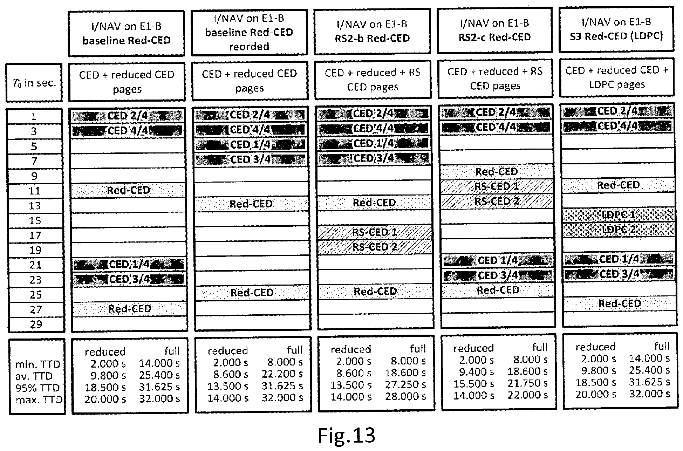

Figure 13 schematically illustrates different page allocations within a subframe with four CED pages, two reduced CED pages and two RS CED pages. Further, figure 13 shows the TTD performance under ideal conditions. The illustrated subframes comprise two additional pages containing redundancy from an outer channel code (LDPC or RS code) and two reduced CED pages. This yields eight CED related pages per subframe.

A combination of allocated pages within a subframe of a navigation message according to the illustrations of figures 10 to 13 allow a variety of distributions within the subframe. This means that two RS CED pages can be aligned consecutively or non-consecutively. This can also mean that none of the at least one RS CED page is aligned consecutively. This can also mean that every RS CED page is aligned consecutively. Additionally, the CED and the reduced CED pages can likewise be aligned within the subframe. Subsequent subframes can also have different page alignments and contents. This means that the set of transmitted CED or RS CED pages in one subframe can differ from the set in the next subframe. In this case, the CED and RS CED pages can belong to the same batch.

The previously described setups and arrangements according to figures 10 to 13 have been further analysed by means of Monte Carlo simulations in different channel environments (AWGN channel; two-state LMS channel; urban vehicular user speed of 5 or 50 km/h each with a satellite elevation angle of 40 degrees). For each $C/N_0$-value 100.000 subframes with a subframe length of 30 seconds and 15 pages per subframe are simulated. The event of a CED recovery failure is recorded if the user is not able to recover the CED from a received subframe. The CED recovery capability of a particular scheme from a signal that is 30 seconds long is denoted intra-subframe CED robustness. If the listening time is longer than one subframe, it is spoken of inter-sub-frame CED robustness. For the sake of brevity and clarity, the scope of this analysis is mostly limited to intra-sub-frame CED robustness. By not repeating the CED pages from subframe to subframe, it is possible to achieve additional gain, when instead RS CED pages are transmitted. This is all due to the fact that the reception of doublets is wasteful and should be avoided.

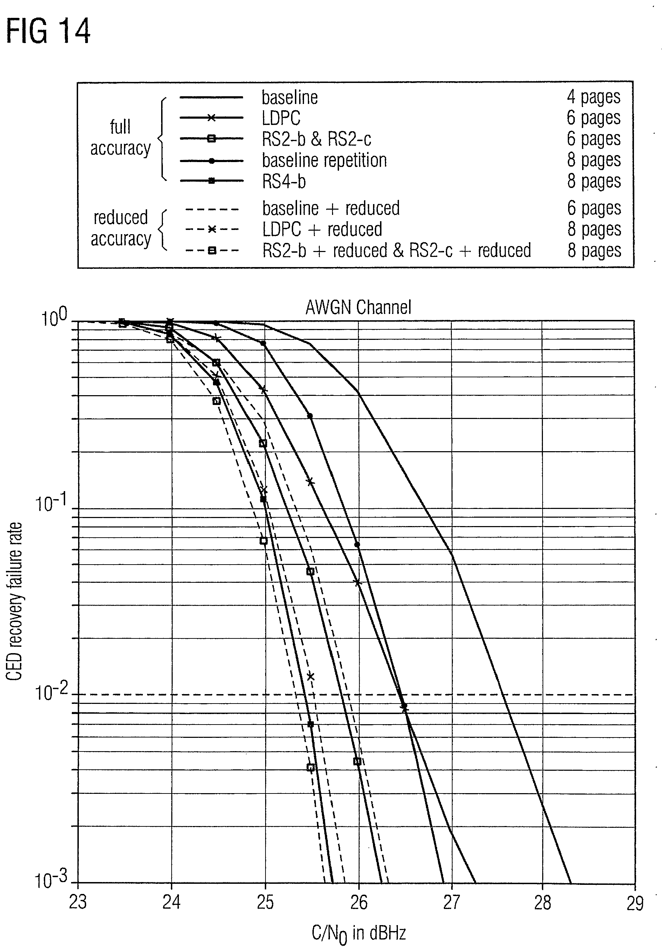

In the following figures 14 to 16, a CED recovery failure rate is shown over a carrier-to-noise ratio (C/N$_0$).

The performance will be evaluated for a target CED recovery failure rate of 10$^{-2}$. This target number is also highlighted in the plots by a horizontal dotted grey line. The number of error events in the grey shaded area is considered to be insufficient. Thus, the results in that area have a lower confidence level and should be regarded as preliminary.

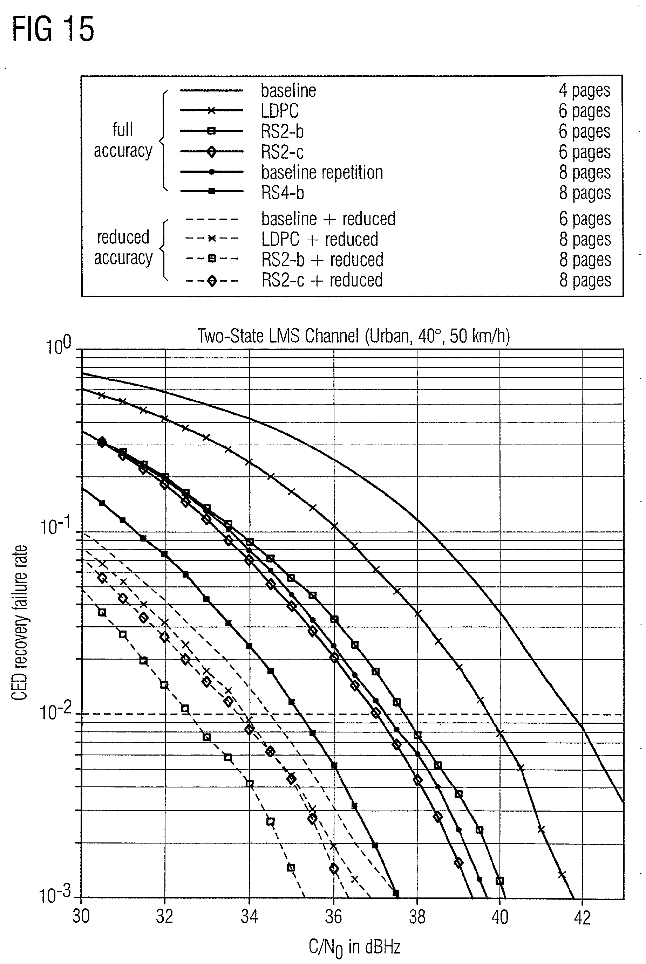

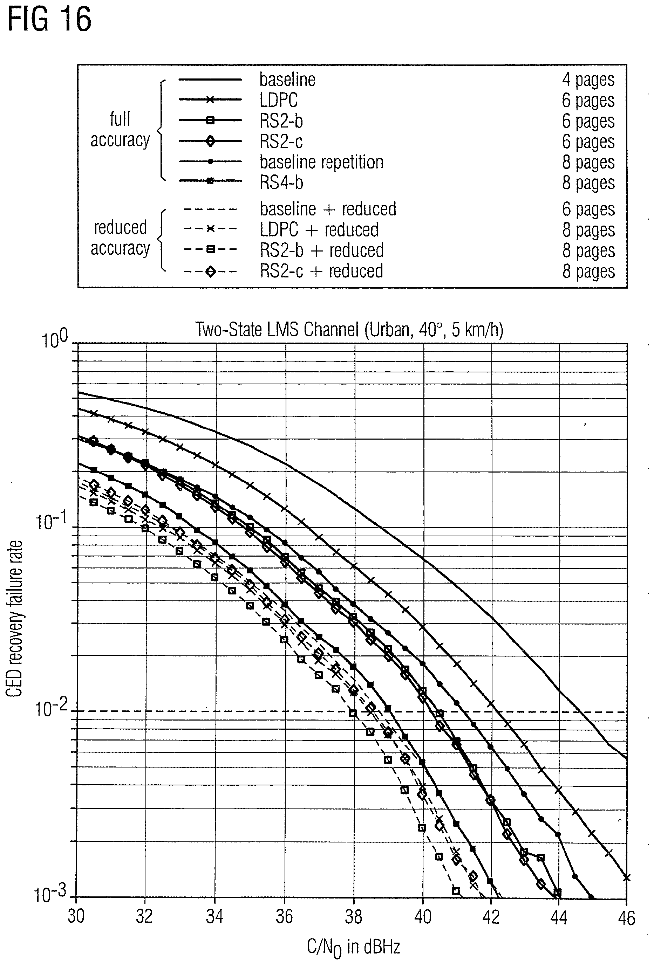

In figure 14 the CED recovery failure rate is shown for an AWGN channel. Figure 15 schematically illustrates a CED recovery failure rate over a carrier-to-noise ratio for a two state LMS channel with a speed of 50 km/h. Figure 16 schematically illustrates a CED recovery failure rate over a carrier-to-noise-ratio simulated over a two-state LMS channel with a 40 degree elevation angle and a speed of 5 km/h. The simulations have been performed for various CED protection schemes after a maximal reception time of one subframe length (30 seconds). As can be seen from figures 14 to 16, reduced accuracy pages (reduced CED) yield lower CED recovery failure rates. Further, for the full accuracy, the RS scheme yields better results in view of CED recovery failures with respect to the amount of pages used and with respect to the other mentioned schemes like baseline and LDPC.

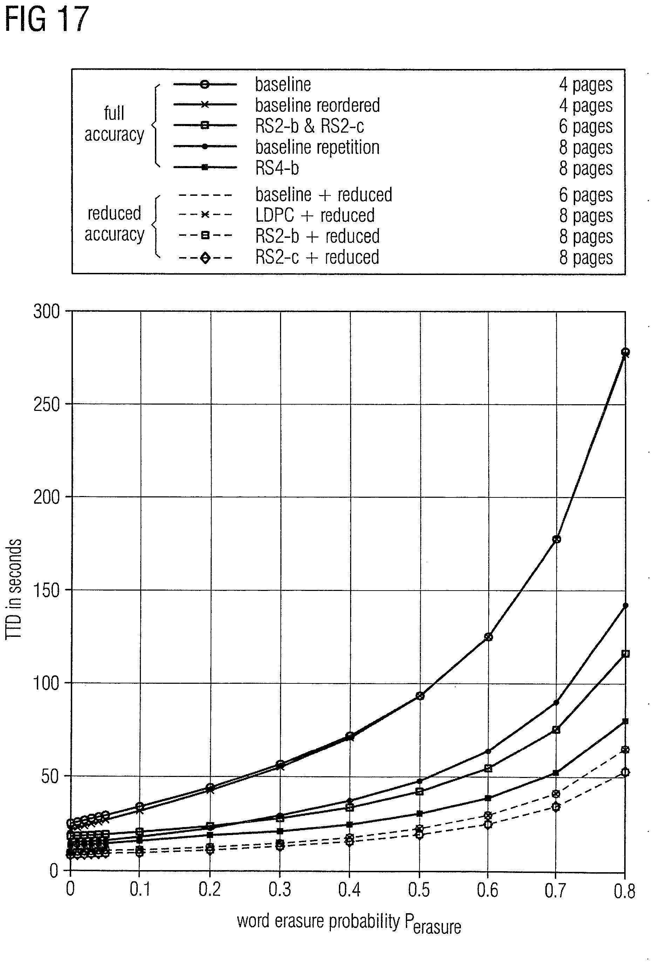

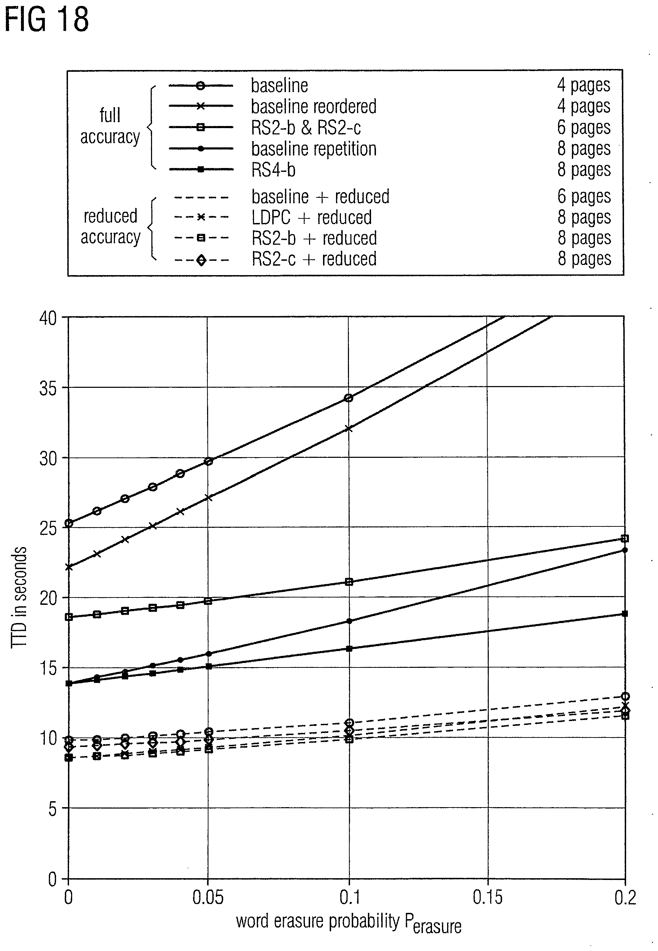

Figure 17 and 18 schematically illustrate TTD in seconds as a function of page erasure probability. A page is considered erased if its CRC fails and reports residual errors after inner decoding. Here, pages are erased with a certain probability independently of each other. For the LDPC scheme, whose results are not depicted in Figures 17 and 18, pages with CRC errors are not discarded. Instead the receiver waits for the LDPC redundancy pages in order to correct residual errors. In an error-free channel, however, the LDPC approach performs equally to the baseline approach in terms of TTD, since the LDPC redundancy parts cannot replace nominal CED pages that have not yet been received. Moreover, the RS codes provide erasure correction property and are capable of correcting errors. Figure 17 and 18 show that the TTD in seconds is reduced under use of RS codes with respect to a baseline approach and a respective number of used CED related pages.

In the following figures, for sake of completeness, the TTD of all previously mentioned allocation schemes is provided as a function of an epoch of a first available symbol for an error-free channel. In a same plot, an average TTD and a TTD with 95% confidence is shown. Further, plots are shown illustrating the respective cumulative distribution function CDF. When the TTD functions of the reduced CED are shown as dashed lines, the TTD functions of the corresponding full accuracy CED are also shown in the same figure. The grey lines are therefore redundant and are equal to the ones of the respective schemes without the reduced CED.

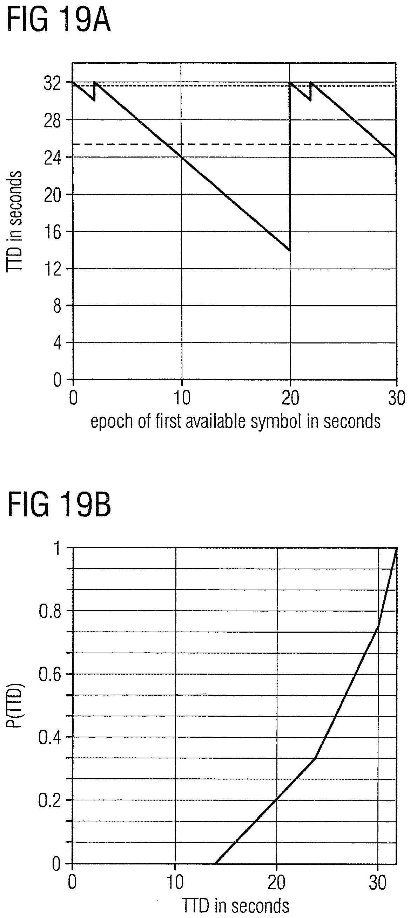

Figure 19A schematically illustrates the TTD in seconds for the baseline approach and the LDPC approach, since in an error-free channel the redundancy in the LDPC pages does not suffice to recover a missing CED page. The same applies to the respective schemes with reduced CED. Figure 19B schematically illustrates the CDF of the TTD according to figure 19A.

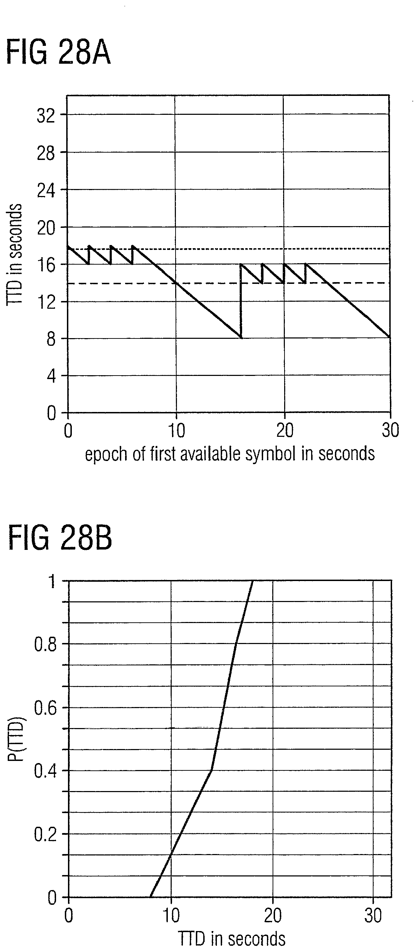

To ease an understanding of the figures 19A to 28B, a short explanation for figure 19A is given. The minimum value for the TTD (14s) is obtained when a first symbol is available at the beginning of page of navigation word type 1, i.e. CED 1, (see figure 10) just located 20s after the beginning of the subframe. If the first symbol is skipped, then the TTD jumps up to the maximum value (32s), since the receiver must wait for the current incomplete page (about 2s) and for a complete subframe (30s). As can be seen from the figure 19A, if the content of a certain page is not relevant in terms of TTD, skipping any of its symbols has no impact on the final result. When starting from the epochs 2s or 22s, the curve is only decreasing. The horizontal lines show the average TTD (dashed line) and the TTD with 95% confidence (solid line).

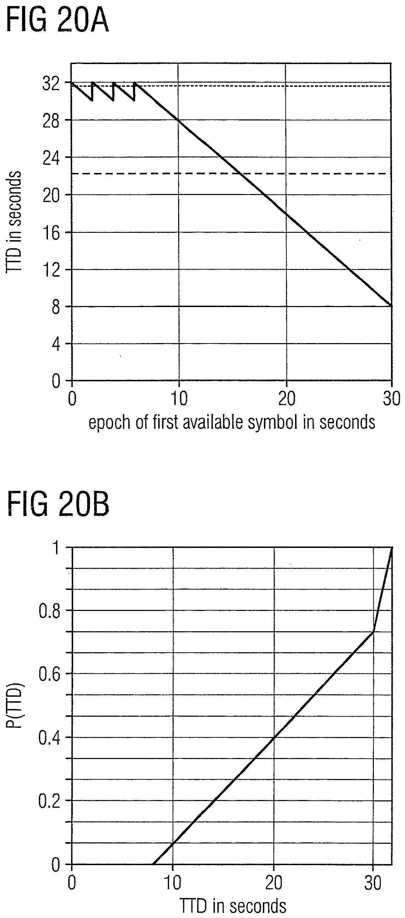

Figure 20A schematically illustrates the TTD for the baseline scheme in a reordered subframe with four pages. In figure 20B, the CDF of the TTD according to figure 20A is shown.

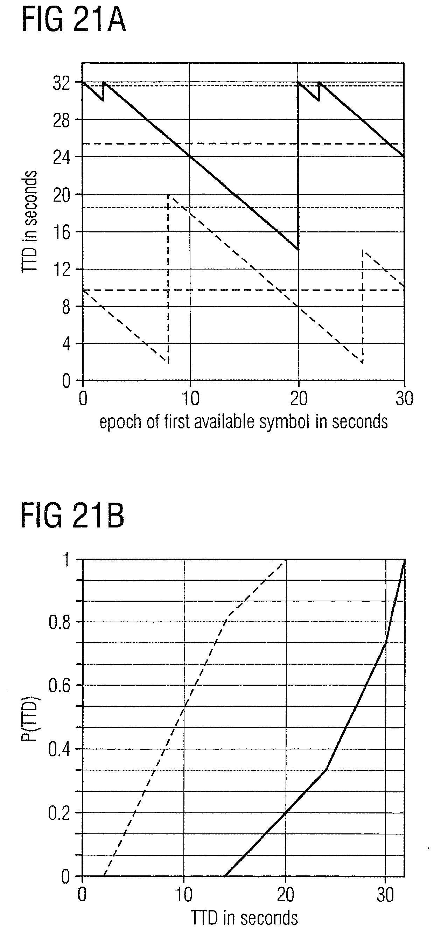

Figure 21A schematically illustrates the TTD of the baseline or LDPC approach with reduced CED pages with 6 or 8 CED related pages respectively. The grey lines show the results of the respective scheme without reduced CED. In figure 21B, the CDF of the TTD according to figure 21A is shown.

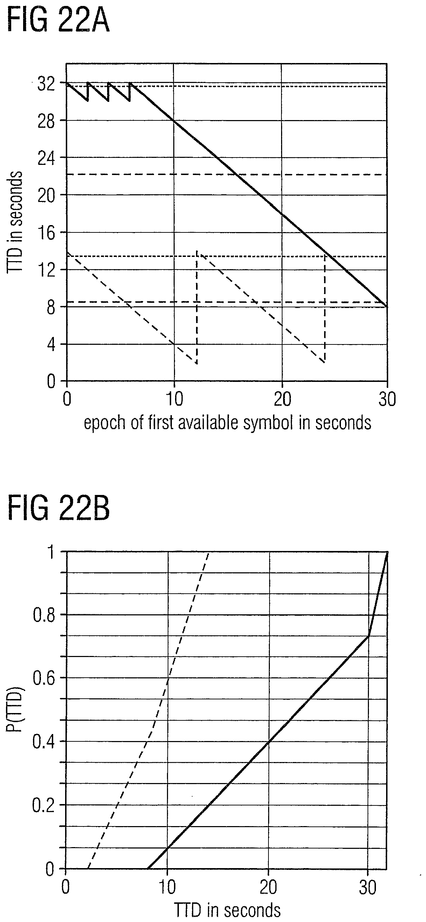

Figure 22A schematically illustrates the TTD of the baseline scheme with reordered and reduced CED pages (6 CED related pages). The grey lines show the results of the respective scheme without reduced CED. In figure 22B, the CDF of the TTD according to figure 22A is shown.

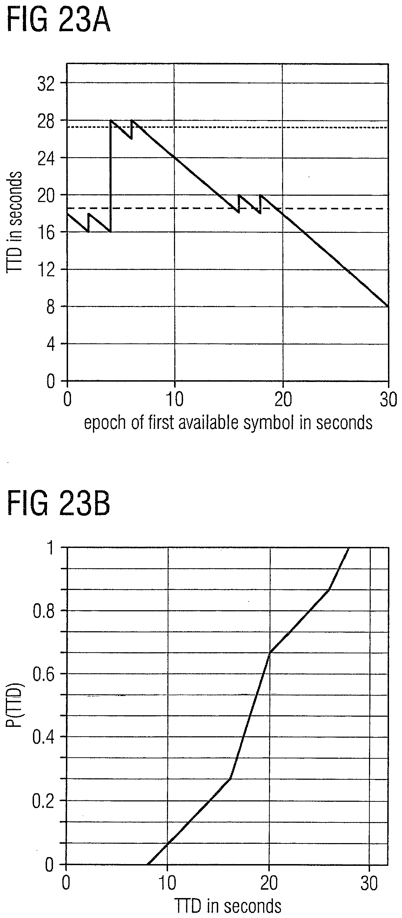

Figure 23A schematically illustrates the TTD of an RS scheme with 6 CED related pages within a subframe of a navigation message. This scheme corresponds to the RS2-b scheme on figure 11A, wherein the CED pages and the at least one RS CED page are respectively aligned consecutively. In figure 23B, the corresponding CDF of the TTD according to figure 23A is shown.

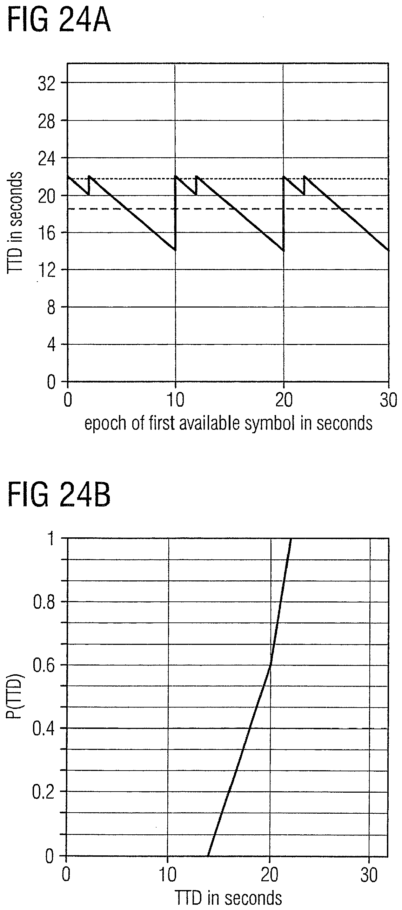

Figure 24A schematically illustrates the TTD according to another RS coding scheme with 6 CED related pages. In this scheme, the CED pages are aligned together timely separated from the following RS CED pages, which are themselves aligned consecutively. The at least one RS CED page are further timely separated from the following two consecutive CED pages. This scheme corresponds to the RS2-c scheme in figure 11A. In figure 24B, the CDF of the TTD according to figure 24A is shown.

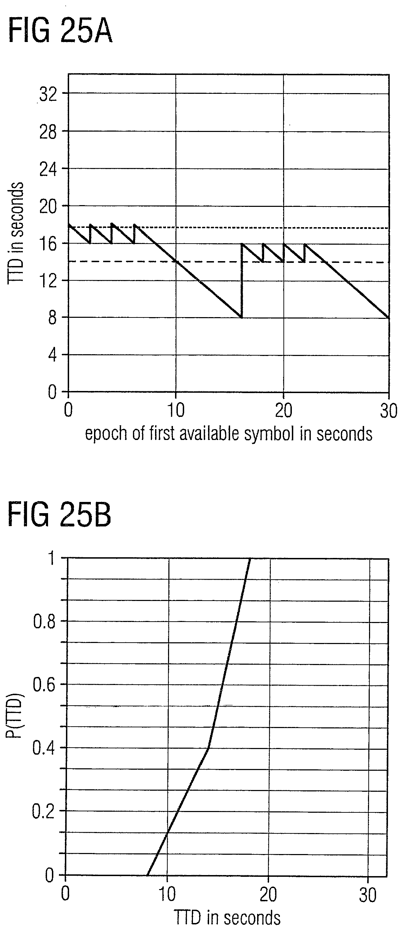

Figure 25A schematically illustrate the TTD according to the baseline repetition scheme of figure 12 with 8 CED related pages. The pages are separated in two blocks within the subframe, such that four pages form a block. In figure 25B, the corresponding CDF of the TTD according to figure 25A is shown.

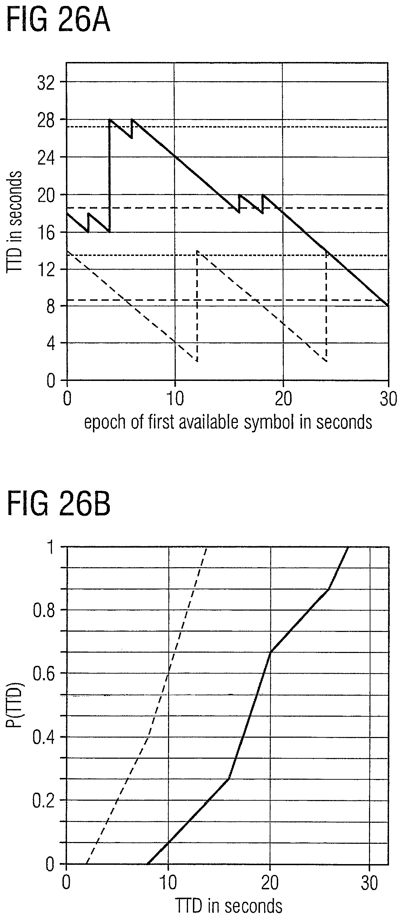

Figure 26A schematically illustrates the TTD according to another RS scheme, RS2-b Red-CED, with reduced CED comprising 8 CED related pages, as illustrated in figure 13. The CED pages are aligned consecutively. The following one reduced CED page is timely separated from the CED pages and the following block of two RS CED pages. The two RS CED pages are themselves timely separated from the following reduced CED page. In figure 26B, the CDFs of the TTD according to figure 26A are shown.

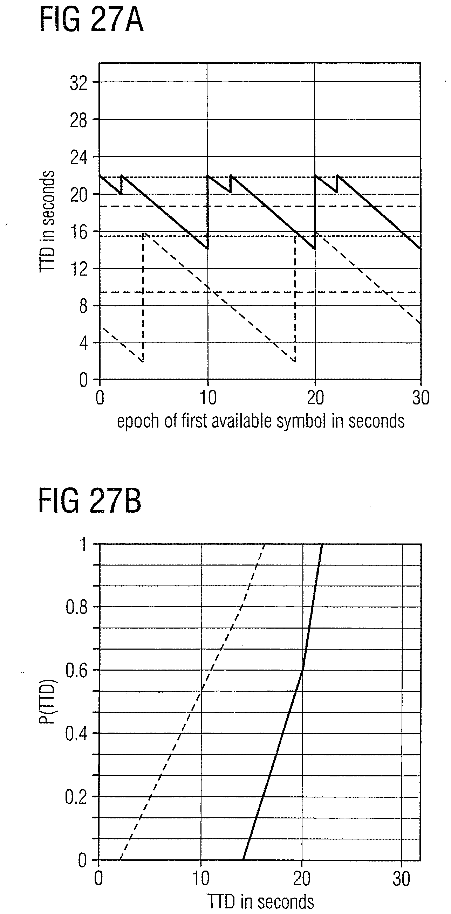

Figure 27A schematically illustrates the TTD according to another RS coding scheme. This coding scheme, RS2-c Red-CED, with reduced CED comprises 8 CED related pages according to figure 13. The grey line shows the results of the respective scheme without reduced CED. In this scheme, two consecutive CED pages are timely separated from a following reduced CED page. The reduced CED page is consecutively followed by two consecutive RS CED pages. The two consecutive RS CED pages are timely separated from other two consecutive CED pages being consecutively followed by another reduced CED page. In figure 27B, the CDFs of the TTD according to figure 27A are shown.

Figure 28A schematically illustrates the TTD according to another RS coding scheme. This coding scheme is the RS4-b according to figure 12 with 8 CED related pages. There are four CED pages and four RS CED pages. The CED pages and the at least one RS CED page are allocated, such that two CED pages and two RS CED pages are aligned consecutively timely separated from the other two RS CED pages consecutively arranged with the other CED pages. In figure 28B, the CDF of the TTD according to figure 28A is shown.

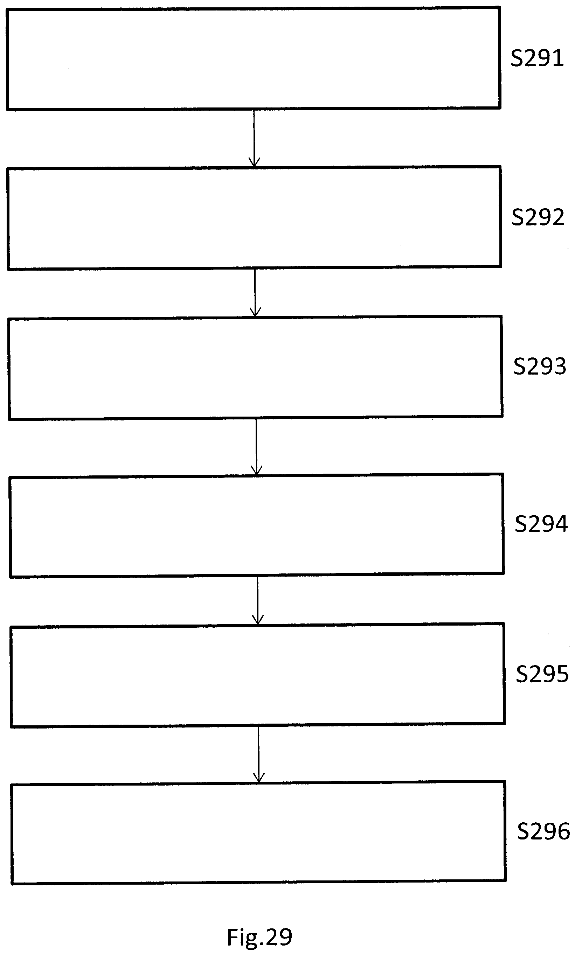

The specifics and details described above can be used in the methods and devices schematically described now with respect to figures 29 to 32. Especially, the different allocation schemes of figures 10 to 13 can be used for allocating RS CED pages, CED pages and/or reduced CED pages within a subframe of a navigation message used by the following embodiments illustrated in figures 29 to 32.

In figure 29, a method of transmitting a navigation message according to an embodiment of the present invention is provided. The method comprises outer RS encoding of the CED in step S291. The method further comprises embedding the CED in CED navigation words and the RS encoded CED in RS CED navigation words in step S292. The method further comprises adding a Cyclic Redundancy Check, CRC, value to the CED navigation words and to the RS CED navigation words in step S293. The method further comprises embedding the CED navigation words into CED pages and the RS CED navigation words into at least one RS CED page in step S294. The method further comprises inner encoding, for example convolutionally encoding, the CED pages and the at least one RS CED page in step S295. The method further comprises transmitting the navigation message including a subframe in step S296. A subset of the inner encoded CED pages and a subset of the inner encoded at least one RS CED page are allocated within the subframe of the navigation message. The subset of the inner encoded CED pages and the subset of the inner encoded at least one RS CED page form a set of pages having the CED.

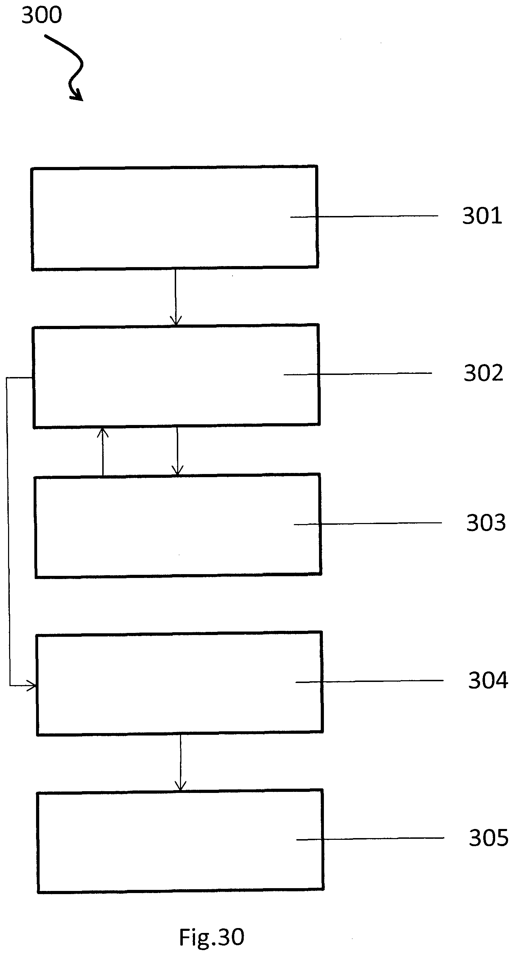

In figure 30, a transmitter 300 for transmitting a navigation message according to an embodiment of the present invention is provided. The transmitter 300 comprises an outer RS encoder 301, a first and second processing unit 302, a CRC value generating unit 303, an inner encoder unit 304, and a transmitting unit 305. The outer RS encoder 301 is adapted to encode Clock and Ephemeris data, CED. The first processing unit 302 is adapted to embed the CED in CED navigation words and the RS encoded CED in RS CED navigation words. The CRC value generating unit 303 is adapted to add a Cyclic Redundancy Check, CRC, value to the CED navigation words and to the RS CED navigation words. The second processing unit 302 is adapted to embed the CED navigation words into CED pages and the RS CED navigation words into at least one RS CED page. The inner encoder unit 304 is adapted to inner encode the CED pages and the at least one RS CED page. The transmitting unit 305 is adapted to transmit the navigation message including a subframe. A subset of the inner encoded CED pages and a subset of the inner encoded at least one RS CED page are allocated within the subframe of the navigation message. The subset of the inner encoded CED pages and the subset of the inner encoded at least one RS CED page form a set of pages having the CED. The first and second processing units 302 can be separate processing units or the same processing unit.

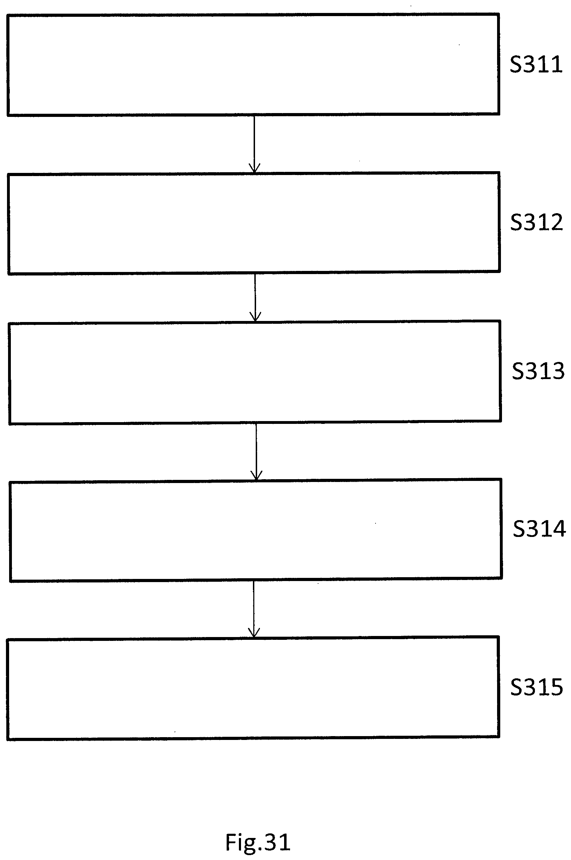

In figure 31, a method of receiving a navigation message according to an embodiment of the present invention is provided. The method comprises receiving a navigation message including a subframe in step S311. A subset of inner encoded CED pages and a subset of at least one inner encoded RS CED page are allocated within the subframe of the navigation message, such that the subset of the inner encoded CED pages and the subset of the at least one inner encoded RS CED page form a set of pages having the CED. The method further comprises inner decoding the inner encoded CED pages and the at least one inner encoded RS CED page in step S312. The method further comprises performing a Cyclic Redundancy Check (CRC) based on a CRC value included in the CED pages and the at least one RS CED page in step S313. The method further comprises extracting CED navigation words and RS CED navigation words from the CED pages and the at least one RS CED page in step S314. The method further comprises deriving the CED under use of outer RS decoding the CED navigation words and the RS CED navigation words in step S315. Each of the CED navigation words and consequently each of the CED pages comprises data parts representing a separate navigation word type and a separate part of the CED.

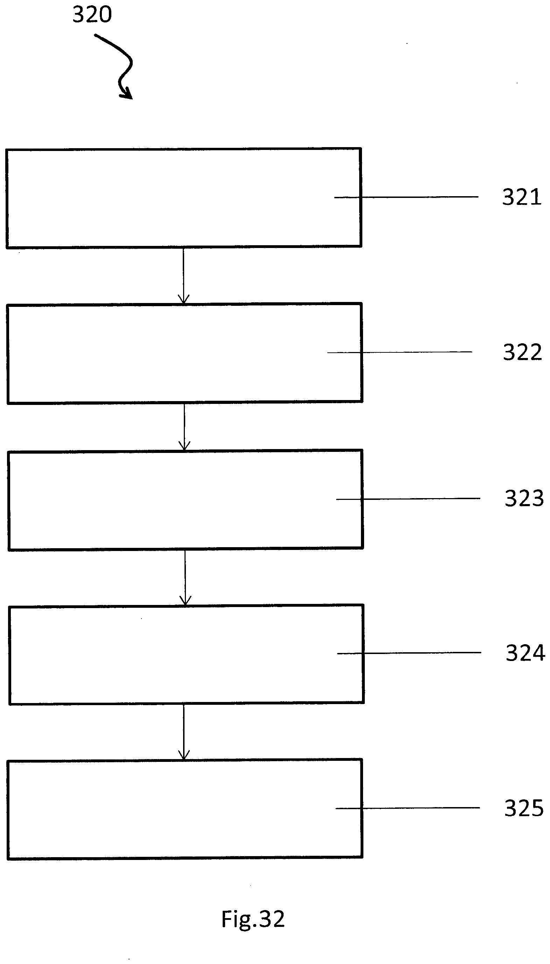

In figure 32, a receiver 320 receiving a navigation message according to an embodiment of the present invention is provided. The receiver comprises a receiving unit 321, an inner decoder unit 322, a CRC unit 323, a processing unit 324 and an outer RS decoder 325. The receiving unit 321 is adapted to receive the navigation message including a subframe. A subset of inner encoded Clock and Ephemeris data, CED, pages and a subset of at least one inner encoded Reed-Solomon (RS) CED page are allocated within the subframe of the navigation message. The subset of the inner encoded CED pages and the subset of the at least one inner encoded RS CED page form a set of pages having CED. The inner decoder unit 322 is adapted to inner decode the inner encoded CED pages and the at least one inner encoded RS CED page. The CRC unit 323 performs a CRC based on a CRC value included in the CED pages and the at least one RS CED page. The processing unit 324 is adapted to extract CED navigation words and RS CED navigation words from the CED pages and the at least one RS CED page. The outer RS decoder 325 is adapted to derive the CED under use of RS decoding the CED navigation words and the RS CED navigation words. Each of the CED navigation words and consequently each of the CED pages comprises data parts representing a separate navigation word type and a separate part of the CED.

Exemplary subsets of the innerly encoded CED pages and exemplary subsets of the innerly encoded RS CED pages as mentioned for figures 29 to 32 can be found in figures 10 to 13. A subset can be any combination of the shown subsets. Further, a subset can vary from subframe to subframe, such that subsequent subframes do not comprise the same allocation scheme. Subframes transmitted over different channels, such as via different frequencies or polarisation may have a same or different allocation scheme.

**Claims**

1.  A method of transmitting a navigation message, the method comprising:

    outer Reed-Solomon, RS, encoding (S291) of Clock and Ephemeris data, CED;
    embedding (S292) the CED in CED navigation words and the RS encoded CED in RS CED navigation words;
    adding (S293) a Cyclic Redundancy Check, CRC, value to the CED navigation words and to the RS CED navigation words
    embedding (S294) the CED navigation words into CED pages and the RS CED navigation words into at least one RS CED page;
    inner encoding (S295) the CED pages and the at least one RS CED page; and
    transmitting (S296) the navigation message including a subframe, wherein a subset of the inner encoded CED pages and a subset of the inner encoded at least one RS CED page are allocated within the subframe of the navigation message, such that the subset of the inner encoded CED pages and the subset of the inner encoded at least one RS CED page form a set of pages having the CED.

2.  The method according to claim 1, wherein Reduced CED is embedded in at least one other page, the at least one other page being inner encoded, wherein the navigation message is transmitted including the subframe, and wherein the inner encoded at least one other page is allocated within the subframe consecutively or non-consecutively with respect to the inner encoded CED pages and the at least one inner encoded RS CED page.

3.  The method according to claims 1 or 2, wherein the navigation word types of the at least one RS CED page are different and the navigation word types of the CED pages are different.

4.  The method according to any one of the foregoing claims, wherein the navigation message comprises the subframe having 30 seconds and the subframe comprises 15 words, wherein each of the inner encoded CED pages, the inner encoded at least one RS CED page and/or each of the at least one inner encoded Reduced CED page has 2 seconds.

5.  The method according to any one of the foregoing claims, wherein the navigation message comprises multiple subframes, wherein the inner encoded CED pages and/or the inner encoded at least one RS CED page are allocated within the multiple subframes of the navigation message.

6.  The method according to any one of the foregoing claims, the data parts and/or navigation word parts of the CED navigation word may sequentially include a word type, issue of data, and a part of the CED, and the data parts and/or navigation word parts of the RS CED navigation word may sequentially include a word type, issue of data, and a part of the RS encoded CED.

7.  A computer program implementing a method according to any one of the foregoing claims, when it is run on a computer.

8. A storage device storing a computer program according to claim 7.

9. A transmitter (300) for transmitting a navigation message, the transmitter comprising:

an outer Reed-Solomon, RS, encoder (301) adapted to encode Clock and Ephemeris data, CED;
a first processing unit (302) adapted to embed the CED in CED navigation words and the RS encoded CED in RS CED navigation words;
a Cyclic Redundancy Check, CRC, value generating unit (303) adapted to add a CRC value to the CED navigation words and to the RS CED navigation words;
a second processing unit (302) further adapted to embed the CED navigation words into CED pages and the RS CED navigation words into at least one RS CED page
an inner encoder (304) adapted to inner encode the CED pages and the at least one RS CED page; and
a transmitting unit (305) adapted to transmit the navigation message including a subframe, wherein a subset of the inner encoded CED pages and a subset of the inner encoded at least one RS CED page are allocated within the subframe of the navigation message, such that the subset of the inner encoded CED pages and the subset of the inner encoded at least one RS CED page form a set of pages having the CED.

10. A method of receiving a navigation message, the method comprising:

receiving (S311) the navigation message including a subframe, wherein a subset of inner encoded Clock and Ephemeris data, CED, pages and a subset of an inner encoded at least one Reed-Solomon, RS, CED page are allocated within the subframe of the navigation message, such that the subset of the inner encoded CED pages and the subset of the inner encoded at least one RS CED page form a set of pages having the CED;
inner decoding (S312) the inner encoded CED pages and the at least one inner encoded RS CED page;
performing (S313) a Cyclic Redundancy Check (CRC) based on a CRC value included in the CED page and the RS CED page
extracting (S314) CED navigation words and RS CED navigation words from the CED pages and the at least one RS CED page;
deriving (S315) the CED under use of outer RS decoding the CED navigation words and the RS CED navigation words.

11. A receiver (320) for receiving a navigation message, the receiver comprising:

a receiving unit (321) adapted to receive the navigation message including a subframe, wherein a subset of inner encoded Clock and Ephemeris data, CED, pages and a subset of an inner encoded at least one Reed-Solomon, RS, CED page are allocated within the subframe of the navigation message, such that the subset of the inner encoded CED pages and the subset of the inner encoded at least one RS CED page form a set of pages having the CED;
an inner decoder (322) adapted to inner decode the inner encoded CED pages and the at least one inner encoded RS CED page;
a Cyclic Redundancy Check, CRC, unit (323) adapted to perform a CRC based on a CRC value included in the CED page and the RS CED page;
a processing unit (324) adapted to extract CED navigation words and RS CED navigation words from the CED pages and the at least one RS CED page; and
an outer RS decoder (325) adapted to derive the CED under use of RS decoding the CED navigation words and the RS CED navigation words.

12. A system comprising a transmitter according to claim 9 and a receiver according to claim 13.

13. A method comprising the steps of a method according to any one of claims 1 to 6 and the steps of a method according to claim 10.

**Patentansprüche**

1. Verfahren zum Senden einer Navigationsnachricht, wobei das Verfahren umfasst:

äußere Reed-Solomon-Codierung, RS-Codierung (S291) von Takt- und Ephemeridendaten, CED;
Einbetten (S292) der CED in CED-Navigationswörter und die RS-codierten CED in RS-CED-Navigationswörter;
Hinzufügen (S293) eines zyklischen Redundanzprüfungswerts, CRC-Werts, zu den CED-Navigatonswörtern und zu den RS-CED-Navigationswörtern,
Einbetten (S294) der CED-Navigationswörter in CED-Seiten und der RS-CED-Navigationswörter in mindestens eine RS-CED-Seite;
inneres Codieren (S295) der CED-Seiten und der mindestens einen RS-CED-Seite; und
Senden (S296) der Navigationsnachricht einschließlich eines Subrahmens, wobei eine Teilmenge der innencodierten CED-Seiten und eine Teilmenge der mindestens einen innencodierten RS-CED-Seite innerhalb des Subrahmens der Navigationsnachricht zugeteilt sind, sodass die Teilmenge der innencodierten CED-Seiten und die Teilmenge der mindestens einen innencodierten RS-CED-Seite einen Satz von Seiten mit den CED bilden.

2. Verfahren nach Anspruch 1, wobei reduzierte CED in mindestens eine andere Seite eingebettet sind, wobei die mindestens eine andere Seite innencodiert ist, wobei die Navigationsnachricht einschließlich des Subrahmens gesendet wird und wobei die innencodierte mindestens eine andere Seite innerhalb des Subrahmens in Bezug auf die innencodierten CED-Seiten und die mindestens eine innencodierte RS-CED-Seite fortlaufend oder nicht fortlaufend zugeteilt ist.

3. Verfahren nach Anspruch 1 oder 2, wobei die Navigationsworttypen der mindestens einen RS-CED-Seite verschieden sind und die Navigationsworttypen der CED-Seiten verschieden sind.

4. Verfahren nach einem der vorangehenden Ansprüche, wobei die Navigationsnachricht den Subrahmen mit 30 Sekunden umfasst und der Subrahmen 15 Wörter umfasst, wobei jede der innencodierten CED-Seiten, der mindestens einen innencodierten RS-CED-Seite und/oder jede der mindestens einen innencodierten reduzierten CED-Seiten 2 Sekunden aufweist.

5. Verfahren nach einem der vorangehenden Ansprüche, wobei die Navigationsnachricht mehrere Subrahmen umfasst, wobei die innencodierten CED-Seiten und/oder die mindestens eine innencodierte RS-CED-Seite innerhalb der mehreren Subrahmen der Navigationsnachricht zugeteilt sind.

6. Verfahren nach einem der vorangehenden Ansprüche, wobei die Datenteile und/oder Navigationswortteile des CED-Navigationsworts sequenziell einen Worttyp, eine Ausgabe von Daten und einen Teil der CED enthalten können und die Datenteile und/oder Navigationswortteile des RS-CED-Navigationsworts sequenziell einen Worttyp, eine Ausgabe von Daten und einen Teil der RS-codierten CED enthalten können.

7. Computerprogramm, das ein Verfahren nach einem der vorangehenden Ansprüche implementiert, wenn es auf einem Computer ausgeführt wird.

8. Speichervorrichtung, die ein Computerprogramm nach Anspruch 7 speichert.

9. Sender (300) zum Senden einer Navigationsnachricht, wobei der Sender umfasst:

einen äußeren Reed-Solomon-Codierer, RS-Codierer (301), der zum Codieren von Takt- und Ephemeridendaten, CED, ausgelegt ist;
eine erste Verarbeitungseinheit (302), die zum Einbetten der CED in CED-Navigationswörter und die RS-codierten CED in RS-CED-Navigationswörter ausgelegt ist;
eine zyklische Redundanzprüfungswert-Generierungseinheit, CRC-Wertgenerierungseinheit, (303), die zum Hinzufügen eines CRC-Werts zu den CED-Navigationswörtern und zu den RS-CED-Navigationswörtern ausgelegt ist;
eine zweite Verarbeitungseinheit (302), die ferner zum Einbetten der CED-Navigationswörter in CED-Seiten und der RS-CED-Navigationswörter in mindestens eine RS-CED-Seite ausgelegt ist,
einen Innencodierer (304), der zum inneren Codieren der CED-Seiten und der mindestens einen RS-CED-Seite ausgelegt ist; und
eine Sendeeinheit (305), die zum Senden der Navigationsnachricht einschließlich eines Subrahmens ausgelegt ist, wobei eine Teilmenge der innencodierten CED-Seiten und eine Teilmenge der innencodierten mindestens einen RS-CED-Seite innerhalb des Subrahmens der Navigationsnachricht zugeteilt sind, sodass die Teilmenge der innencodierten CED-Seiten und die Teilmenge der innencodierten mindestens einen RS-CED-Seite einen Satz von Seiten mit den CED bilden.

10. Verfahren zum Empfangen einer Navigationsnachricht, wobei das Verfahren umfasst:
Empfangen (S311) der Navigationsnachricht einschließlich eines Subrahmens, wobei eine Teilmenge von innencodierten Takt- und Ephemeridendaten-Seiten, CED-Seiten, und eine Teilmenge mindestens einer innencodierten Reed-Solomon-CED-Seite, RS-CED-Seite, innerhalb des Subrahmens der Navigationsnachricht zugeteilt sind, sodass die Teilmenge der innencodierten CED-Seiten und die Teilmenge der innencodierten mindestens einen RS-CED-Seite einen Satz von Seiten mit den CED bilden;

inneres Decodieren (S312) der innencodierten CED-Seiten und der mindestens einen innencodierten RS-CED-Seite;
Durchführen (S313) einer zyklischen Redundanzprüfung (CRC) auf Grundlage eines CRC-Werts, der in der CED-Seite und der RS-CED-Seite enthalten ist,
Extrahieren (S314) von CED-Navigationswörtern und RS-CED-Navigationswörtern aus den CED-Seiten und der mindestens einen RS-CED-Seite;
Ableiten (S315) der CED unter Verwendung einer äußeren RS-Decodierung der CED-Navigationswörter und der RS-CED-Navigationswörter.

11. Empfänger (320) zum Empfangen einer Navigationsnachricht, wobei der Empfänger umfasst:

eine Empfangseinheit (321), die zum Empfangen der Navigationsnachricht einschließlich eines Subrahmens ausgelegt ist, wobei eine Teilmenge von innencodierten Takt- und Ephemeridendaten-Seiten, CED-Seiten, und eine Teilmenge mindestens einer innencodierten Reed-Solomon-CED-Seite, RS-CED-Seite, innerhalb des Subrahmens der Navigationsnachricht zugeteilt sind, sodass die Teilmenge der innencodierten CED-Seiten und die Teilmenge der innencodierten mindestens einen RS-CED-Seite einen Satz von Seiten mit den CED bilden;
einen Innendecodierer (322), der zum inneren Decodieren der innencodierten CED-Seiten und der mindestens einen innencodierten RS-CED-Seite ausgelegt ist;
eine zyklische Redundanzprüfungseinheit, CRC-Einheit (323), die zum Durchführen einer zyklischen Redundanzprüfung (CRC) auf Grundlage eines CRC-Werts ausgelegt ist, der in der CED-Seite und der RS-CED-Seite enthalten ist,
eine Verarbeitungseinheit (324), die zum Extrahieren von CED-Navigationswörtern und RS-CED-Navigationswörtern aus den CED-Seiten und der mindestens einen RS-CED-Seite ausgelegt ist; und
einen Außen-RS-Decodierer (325), der zum Ableiten der CED unter Verwendung einer äußeren RS-Decodierung der CED-Navigationswörter und der RS-CED-Navigationswörter ausgelegt ist.

12. System, das einen Sender nach Anspruch 9 und einen Empfänger nach Anspruch 13 umfasst.

13. Verfahren, das die Schritte eines Verfahrens nach einem der Ansprüche 1 bis 6 und die Schritte eines Verfahrens nach Anspruch 10 umfasst.

**Revendications**

1. Procédé de transmission d'un message de navigation, le procédé comprenant :

réaliser un codage de Reed-Solomon, RS, externe (S291) de données d'horloge et d'éphémérides, CED ;
incorporer (S292) les CED dans des mots de navigation de CED et les CED à codage RS dans des mots de navigation de CED RS ;
ajouter (S293) une valeur de contrôle de redondance cyclique, CRC, aux mots de navigation de CED et aux mots de navigation de CED RS ;
incorporer (S294) les mots de navigation de CED dans des pages de CED et les mots de navigation de CED RS dans au moins une page de CED RS ;
réaliser un codage interne (S295) des pages de CED et de l'au moins une page de CED RS ; et
transmettre (S296) le message de navigation comprenant une sous-trame, dans lequel un sous-ensemble des pages de CED à codage interne et un sous-ensemble de l'au moins une page de CED RS à codage interne sont attribués à l'intérieur de la sous-trame du message de navigation, de telle sorte que le sous-ensemble des pages de CED à codage interne et le sous-ensemble de l'au moins une page de CED RS à codage interne forment un ensemble de pages ayant les CED.

2. Procédé selon la revendication 1, dans lequel des CED réduites sont incorporées dans au moins une autre page, l'au moins une autre page subissant un codage interne, dans lequel le message de navigation est transmis en comprenant la sous-trame, et dans lequel l'au moins une autre page à codage interne est attribuée à l'intérieur de la sous-trame consécutivement ou non consécutivement par rapport aux pages de CED à codage interne et à l'au moins une page de CED RS à codage interne.

3. Procédé selon la revendication 1 ou 2, dans lequel les types de mots de navigation de l'au moins une page de CED RS sont différents et les types de mots de navigation des pages de CED sont différents.

4. Procédé selon l'une quelconque des revendications précédentes, dans lequel le message de navigation comprend la sous-trame possédant 30 secondes et la sous-trame comprend 15 mots, dans lequel chacune des pages de CED à codage interne, l'au moins une page de CED RS à codage interne et/ou chacune de l'au moins une page de CED réduites à codage interne possèdent 2 secondes.

5. Procédé selon l'une quelconque des revendications précédentes, dans lequel le message de navigation comprend de multiples sous-trames, dans lequel les pages de CED à codage interne et/ou l'au moins une page de CED RS à codage interne sont attribuées à l'intérieur des multiples sous-trames du message de navigation.

6. Procédé selon l'une quelconque des revendications précédentes, dans lequel les parties de données et/ou les parties de mot de navigation du mot de navigation de CED peuvent comprendre séquentiellement un type de mot, une émission de données et une partie des CED, et les parties de données et/ou les parties de mot de navigation du mot de navigation de CED RS peuvent comprendre séquentiellement un type de mot, une émission de données et une partie des CED à codage RS.

7. Programme d'ordinateur mettant en œuvre un procédé selon l'une quelconque des revendications précédentes, lorsqu'il est exécuté sur un ordinateur.

8. Dispositif de stockage stockant un programme d'ordinateur selon la revendication 7.

9. Emetteur (300) pour transmettre un message de navigation, l'émetteur comprenant :

un codeur de Reed-Solomon, RS, externe (301) conçu pour coder de données d'horloge et d'éphémérides, CED ;
une première unité de traitement (302) conçue pour incorporer les CED dans des mots de navigation de CED et les CED à codage RS dans des mots de navigation de CED RS ;
une unité de génération de valeur de contrôle de redondance cyclique, CRC, (303) conçue pour ajouter une valeur de CRC aux mots de navigation de CED et aux mots de navigation de CED RS ;
une seconde unité de traitement (302) en outre conçue pour incorporer les mots de navigation de CED dans des pages de CED et les mots de navigation de CED RS dans au moins une page de CED RS ;
un codeur interne (304) conçu pour réaliser un codage interne des pages de CED et de l'au moins une page de CED RS ; et
une unité de transmission (305) conçue pour transmettre le message de navigation comprenant une sous-trame, un sous-ensemble des pages de CED à codage interne et un sous-ensemble de l'au moins une page de CED RS à codage interne étant attribués à l'intérieur de la sous-trame du message de navigation, de telle sorte que le sous-ensemble des pages de CED à codage interne et le sous-ensemble de l'au moins une page de CED RS à codage interne forment un ensemble de pages ayant les CED.

10. Procédé de réception d'un message de navigation, le procédé comprenant :

recevoir (S311) le message de navigation comprenant une sous-trame, dans lequel un sous-ensemble de pages de données d'horloge et d'éphémérides, CED, à codage interne et un sous-ensemble d'au moins une page de CED de Reed-Solomon, RS, à codage interne sont attribués à l'intérieur de la sous-trame du message de navigation, de telle sorte que le sous-ensemble des pages de CED à codage interne et le sous-ensemble de l'au moins une page de CED RS à codage interne forment un ensemble de pages ayant les CED ;
réaliser un décodage interne (S312) des pages de CED à codage interne et de l'au moins une page de CED RS à codage interne ;
effectuer (S313) un contrôle de redondance cyclique, CRC, sur la base d'une valeur de CRC comprise dans la page de CED et la page de CED RS ;

extraire (S314) des mots de navigation de CED et des mots de navigation de CED RS à partir des pages de CED et l'au moins une page de CED RS ;

déduire (S315) les CED par utilisation d'un décodage RS externe des mots de navigation de CED et des mots de navigation de CED RS.

**11.** Récepteur (320) pour recevoir un message de navigation, le récepteur comprenant :

une unité de réception (321) conçue pour recevoir le message de navigation comprenant une sous-trame, un sous-ensemble de pages de données d'horloge et d'éphémérides, CED, à codage interne et un sous-ensemble d'au moins une page de CED de Reed-Solomon, RS, à codage interne étant attribués à l'intérieur de la sous-trame du message de navigation, de telle sorte que le sous-ensemble des pages de CED à codage interne et le sous-ensemble de l'au moins une page de CED RS à codage interne forment un ensemble de pages ayant les CED ;

un décodeur interne (322) conçu pour réaliser un décodage interne des pages de CED à codage interne et de l'au moins une page de CED RS à codage interne ;

une unité de contrôle de redondance cyclique, CRC, (323) conçue pour effectuer un CRC sur la base d'une valeur de CRC comprise dans la page de CED et la page de CED RS ;

une unité de traitement (324) conçue pour extraire des mots de navigation de CED et des mots de navigation de CED RS à partir des pages de CED et de l'au moins une page de CED RS ; et

un décodeur RS externe (325) conçu pour déduire les CED par utilisation d'un décodage RS des mots de navigation de CED et des mots de navigation de CED RS.

**12.** Système comprenant un émetteur selon la revendication 9 et un récepteur selon la revendication 13.

**13.** Procédé comprenant les étapes d'un procédé selon l'une quelconque des revendications 1 à 6 et les étapes d'un procédé selon la revendication 10.

| $T_0$ in sec. | I/NAV on E1-B (ICD Issue 1.1) baseline | | I/NAV on E1-B baseline reorded |
|---|---|---|---|
| | all pages shown | only CED pages | only CED pages |
| 1 | CED 2/4 | CED 2/4 | CED 2/4 |
| 3 | CED 4/4 | CED 4/4 | CED 4/4 |
| 5 | GST-UTC | | CED 1/4 |
| 7 | ALM 1 | | CED 3/4 |
| 9 | ALM 2 | | |
| 11 | Int 1 | | |
| 13 | Int 2 | | |
| 15 | Int 3 | | |
| 17 | Int 4 | | |
| 19 | Int 5 | | |
| 21 | CED 1/4 | CED 1/4 | |
| 23 | CED 3/4 | CED 3/4 | |
| 25 | IONO,Flags,BGD | | |
| 27 | Spare | | |
| 29 | Spare | | |
| min. TTD | | 14.000 s | 8.000 s |
| av. TTD | | 25.400 s | 22.200 s |
| 95% TTD | | 31.625 s | 31.625 s |
| max. TTD | | 32.000 s | 32.000 s |

Fig.1

| $T_0$ in sec. | I/NAV on E1-B **baseline Red-CED**<br>CED + reduced CED pages | I/NAV on E1-B **S3 (LDPC)**<br>(LDPC)-CED pages | I/NAV on E1-B **S3 Red-CED (LDPC)**<br>CED + reduced CED+ LDPC pages |
|---|---|---|---|
| 1 | CED 2/4 | CED 2/4 | CED 2/4 |
| 3 | CED 4/4 | CED 4/4 | CED 4/4 |
| 5 | | | |
| 7 | | | |
| 9 | | | |
| 11 | Red-CED | | Red-CED |
| 13 | | | |
| 15 | | LDPC 1 | LDPC 1 |
| 17 | | LDPC 2 | LDPC 2 |
| 19 | | | |
| 21 | CED 1/4 | CED 1/4 | CED 1/4 |
| 23 | CED 3/4 | CED 3/4 | CED 3/4 |
| 25 | | | |
| 27 | Red-CED | | Red-CED |
| 29 | | | |

| | reduced    full | full | reduced    full |
|---|---|---|---|
| min. TTD | 2.000 s    14.000 s | 14.000 s | 2.000 s    14.000 s |
| av. TTD | 9.800 s    25.400 s | 25.400 s | 9.800 s    25.400 s |
| 95% TTD | 18.500 s    31.625 s | 31.625 s | 18.500 s    31.625 s |
| max. TTD | 20.000 s    32.000 s | 32.000 s | 20.000 s    32.000 s |

Fig.2

## FIG 3A

RS information word
(length k x 128 bits)

RS code word (length n x 128 bits)

RS information word | RS redundancy

CED navigation words:
4 x 128 bits

| 1 | 2 | 3 | 4 |

systematic
RS encoder
rate = k/n

CED navigation words:
4 x 128 bits

RS-CED navigation words:
(n - 4) x 128 bits

| 1 | 2 | 3 | 4 | 1 | 2 | • • • | n-4 |

## FIG 3B

RS information word
(length k x 128 bits)

RS code word (length n x 128 bits)

CED navigation words:
4 x 128 bits

| 1 | 2 | 3 | 4 |

non-
systematic
RS encoder
rate = k/n

RS-CED navigation words: n x 128 bits

| 1 | 2 | 3 | 4 | 5 | 6 | • • • | n |

source → [**outer** channel encoder] → [**inner** channel encoder] → [**channel**] → [**inner** channel decoder] → [**outer** channel decoder] → sink

Fig.3C

# FIG 4

CED & RS-CED
navigation words
from systematic
RS encoding

pages
2 seconds duration

| | | |
|---|---|---|
| 1 | e-1-o | CED 1 |
| 2 | e-2-o | CED 2 |
| 3 | e-3-o | CED 3 |
| 4 | e-4-o | CED 4 |
| 1 | e-1-o | RS-CED 1 |
| 2 | e-2-o | RS-CED 2 |
| 3 | e-3-o | RS-CED 3 |
| 4 | e-4-o | RS-CED 4 |

unaltered,
nominal
CED pages

split even / odd

appending of non-CED bits,
CRC value generation,
convolutional encoder,
interleaver, sync. symbol
attachment

# FIG 5

| CED 1 | CED 1 | CED 1 | CED 1 |
| CED 2 | CED 2 | RS-CED 1 | RS-CED 1 |
| CED 3 | CED 3 | RS-CED 2 | RS-CED 1 |
| CED 4 | CED 1 | CED 4 | CED 4 |

CED recoverable: all pages available

CED not recoverable: page 4 is missing, doublets are not useful

CED recoverable: CED pages 2 & 3 can be recovered by using RS-CED 1 & 2 pages. They act like joker pages.

CED not recoverable: CED pages 2 & 3 can not be recovered, RS-CED pages have to be different, too. Doublets are not useful

| 0 (even) | 0 (type nominal) | navigation word part 1 of 2 | tail |
|---|---|---|---|
| 1 | 1 | 112 | 6 |

| 1 (odd) | 0 (type nominal) | navigation word part 2 of 2 | EDBS | SAR | spare | CRC | region status | tail |
|---|---|---|---|---|---|---|---|---|
| 1 | 1 | 16 | 40 | 22 | 2 | 24 | 8 | 6 |

Fig.6A

## FIG 6B

navigation word
128 bits

navigation word part 1
112 bits

navigation word part 2
16 bits

| word type | $IOD_{nav}$ | raw clock and ephemeris data | | pages (2s) |
| --- | --- | --- | --- | --- |
| $t_1$ | | $CED_1$ | → | CED 1/4 |
| $t_2$ | | $CED_2$ | → | CED 2/4 |
| $t_3$ | | $CED_3$ | → | CED 3/4 |
| $t_4$ | | $CED_4$ | → | CED 4/4 |

## FIG 6C

| navigation word (128 bits) | | | | | | | | | | | | | | | | |
| --- | --- | --- | --- | --- | --- | --- | --- | --- | --- | --- | --- | --- | --- | --- | --- | --- |
| type | $IOD_{nav}$ | $CED_i, i = \{1, 2, 3, 4\}$ | | | | | | | | | | | | | | |
| 8 | 8 | 8 | 8 | 8 | 8 | 8 | 8 | 8 | 8 | 8 | 8 | 8 | 8 | 8 | 8 | |
| $c_{i,1}$ | $c_{i,2}$ | $c_{i,3}$ | $c_{i,4}$ | $c_{i,5}$ | $c_{i,6}$ | $c_{i,7}$ | $c_{i,8}$ | $c_{i,9}$ | $c_{i,10}$ | $c_{i,11}$ | $c_{i,12}$ | $c_{i,13}$ | $c_{i,14}$ | $c_{i,15}$ | $c_{i,16}$ | |
| $c_i$ | | | | | | | | | | | | | | | | |

$c_{i,j}$ is 8 bit long (octet) and forms a Galois field symbol
j-th element of the column vector $c_i$ which contains the $CED_i$ for $j > 2$
$c_{i,1}$ contains 6 bits denoting the navigation word type and the two MSBs of $IOD_{nav}$
$c_{i,2}$ contains the 8 LSBs of $IOD_{nav}$

## FIG 7A

| $c_{1,1}$ | $c_{1,2}$ | $c_{1,3}$ | $c_{1,4}$ | $c_{1,5}$ | $c_{1,6}$ | $c_{1,7}$ | $c_{1,8}$ | $c_{1,9}$ | $c_{1,10}$ | $c_{1,11}$ | $c_{1,12}$ | $c_{1,13}$ | $c_{1,14}$ | $c_{1,15}$ | $c_{1,16}$ | ← CED 1/4 |
|---|---|---|---|---|---|---|---|---|---|---|---|---|---|---|---|---|
| $c_{2,1}$ | $c_{2,2}$ | $c_{2,3}$ | $c_{2,4}$ | $c_{2,5}$ | $c_{2,6}$ | $c_{2,7}$ | $c_{2,8}$ | $c_{2,9}$ | $c_{2,10}$ | $c_{2,11}$ | $c_{2,12}$ | $c_{2,13}$ | $c_{2,14}$ | $c_{2,15}$ | $c_{2,16}$ | ← CED 2/4 |
| $c_{3,1}$ | $c_{3,2}$ | $c_{3,3}$ | $c_{3,4}$ | $c_{3,5}$ | $c_{3,6}$ | $c_{3,7}$ | $c_{3,8}$ | $c_{3,9}$ | $c_{3,10}$ | $c_{3,11}$ | $c_{3,12}$ | $c_{3,13}$ | $c_{3,14}$ | $c_{3,15}$ | $c_{3,16}$ | ← CED 3/4 |
| $c_{4,1}$ | $c_{4,2}$ | $c_{4,3}$ | $c_{4,4}$ | $c_{4,5}$ | $c_{4,6}$ | $c_{4,7}$ | $c_{4,8}$ | $c_{4,9}$ | $c_{4,10}$ | $c_{4,11}$ | $c_{4,12}$ | $c_{4,13}$ | $c_{4,14}$ | $c_{4,15}$ | $c_{4,16}$ | ← CED 4/4 |
| $\gamma_{5,1}$ | $\gamma_{5,2}$ | $\gamma_{5,3}$ | $\gamma_{5,4}$ | $\gamma_{5,5}$ | $\gamma_{5,6}$ | $\gamma_{5,7}$ | $\gamma_{5,8}$ | $\gamma_{5,9}$ | $\gamma_{5,10}$ | $\gamma_{5,11}$ | $\gamma_{5,12}$ | $\gamma_{5,13}$ | $\gamma_{5,14}$ | $\gamma_{5,15}$ | $\gamma_{5,16}$ | ← RS-CED1 |
| $\gamma_{6,1}$ | $\gamma_{6,2}$ | $\gamma_{6,3}$ | $\gamma_{6,4}$ | $\gamma_{6,5}$ | $\gamma_{6,6}$ | $\gamma_{6,7}$ | $\gamma_{6,8}$ | $\gamma_{6,9}$ | $\gamma_{6,10}$ | $\gamma_{6,11}$ | $\gamma_{6,12}$ | $\gamma_{6,13}$ | $\gamma_{6,14}$ | $\gamma_{6,15}$ | $\gamma_{6,16}$ | ← RS-CED2 |

$\vdots$

$c_{i,j}$  j-th element of the column vector $c_i$ which contains the $CED_i$ and the 8 LSBs of $IOD_{nav}$
$c_{i,j}$ is 8 bit long (octet) and forms a Galois field symbol
dark grey elements are fed to the RS encoder
light grey elements are not RS encoded
(navigation word type 2-4 and $IOD_{nav}$ in navigation words 2-4)

$\gamma_{i,j}$  j-th element of the column vector $\gamma_i$ which contains the $RS\text{-}CED_i$ and the 8 LSBs of $IOD_{nav}$
$\gamma_{i,j}$ is 8 bit long (octet) and forms a Galois field symbol
diagonally ruled elements denote RS parity symbols
light grey elements are not RS encoded (RS navigation word types and $IOD_{nav}$)

## FIG 7B

| $c_1$ | $c_2$ | $c_3$ | $c_4$ | $c_5$ | $c_6$ | $c_7$ | $c_8$ | $c_9$ | $c_{10}$ | $c_{11}$ | $c_{12}$ | $c_{13}$ | $c_{14}$ | $c_{15}$ | $c_{16}$ | ← CED 1/4 |
|---|---|---|---|---|---|---|---|---|---|---|---|---|---|---|---|---|
| $c_{17}$ | $c_{18}$ | $c_{19}$ | $c_{20}$ | $c_{21}$ | $c_{22}$ | $c_{23}$ | $c_{24}$ | $c_{25}$ | $c_{26}$ | $c_{27}$ | $c_{28}$ | $c_{29}$ | $c_{30}$ | $c_{31}$ | $c_{32}$ | ← CED 2/4 |
| $c_{33}$ | $c_{34}$ | $c_{35}$ | $c_{36}$ | $c_{37}$ | $c_{38}$ | $c_{39}$ | $c_{40}$ | $c_{41}$ | $c_{42}$ | $c_{43}$ | $c_{44}$ | $c_{45}$ | $c_{46}$ | $c_{47}$ | $c_{48}$ | ← CED 3/4 |
| $c_{49}$ | $c_{50}$ | $c_{51}$ | $c_{52}$ | $c_{53}$ | $c_{54}$ | $c_{55}$ | $c_{56}$ | $c_{57}$ | $c_{58}$ | $c_{59}$ | $c_{60}$ | $c_{61}$ | $c_{62}$ | $c_{63}$ | $c_{64}$ | ← CED 4/4 |
| $\gamma_{65}$ | $\gamma_{66}$ | $\gamma_{67}$ | $\gamma_{68}$ | $\gamma_{69}$ | $\gamma_{70}$ | $\gamma_{71}$ | $\gamma_{72}$ | $\gamma_{73}$ | $\gamma_{74}$ | $\gamma_{75}$ | $\gamma_{76}$ | $\gamma_{77}$ | $\gamma_{78}$ | $\gamma_{79}$ | $\gamma_{80}$ | ← RS-CED1 |
| $\gamma_{81}$ | $\gamma_{82}$ | $\gamma_{83}$ | $\gamma_{84}$ | $\gamma_{85}$ | $\gamma_{86}$ | $\gamma_{87}$ | $\gamma_{88}$ | $\gamma_{89}$ | $\gamma_{90}$ | $\gamma_{91}$ | $\gamma_{92}$ | $\gamma_{93}$ | $\gamma_{94}$ | $\gamma_{95}$ | $\gamma_{96}$ | ← RS-CED2 |

$\vdots$

## FIG 7C

| $c_1$ | $c_2$ | $c_3$ | $c_4$ | $c_5$ | $c_6$ | $c_7$ | $c_8$ | $c_9$ | $c_{10}$ | $c_{11}$ | $c_{12}$ | $c_{13}$ | $c_{14}$ | $c_{15}$ | $c_{16}$ | ← CED 1/4 |
|---|---|---|---|---|---|---|---|---|---|---|---|---|---|---|---|---|
| $c_{17}$ | $c_{18}$ | $c_{19}$ | $c_{20}$ | $c_{21}$ | $c_{22}$ | $c_{23}$ | $c_{24}$ | $c_{25}$ | $c_{26}$ | $c_{27}$ | $c_{28}$ | $c_{29}$ | $c_{30}$ | $c_{31}$ | $c_{32}$ | ← CED 2/4 |
| $c_{33}$ | $c_{34}$ | $c_{35}$ | $c_{36}$ | $c_{37}$ | $c_{38}$ | $c_{39}$ | $c_{40}$ | $c_{41}$ | $c_{42}$ | $c_{43}$ | $c_{44}$ | $c_{45}$ | $c_{46}$ | $c_{47}$ | $c_{48}$ | ← CED 3/4 |
| $c_{49}$ | $c_{50}$ | $c_{51}$ | $c_{52}$ | $c_{53}$ | $c_{54}$ | $c_{55}$ | $c_{56}$ | $c_{57}$ | $c_{58}$ | $c_{59}$ | $c_{60}$ | $c_{61}$ | $c_{62}$ | $c_{63}$ | $c_{64}$ | ← CED 4/4 |
| $\gamma_{65}$ | $\gamma_{66}$ | $\gamma_{67}$ | $\gamma_{68}$ | $\gamma_{69}$ | $\gamma_{70}$ | $\gamma_{71}$ | $\gamma_{72}$ | $\gamma_{73}$ | $\gamma_{74}$ | $\gamma_{75}$ | $\gamma_{76}$ | $\gamma_{77}$ | $\gamma_{78}$ | $\gamma_{79}$ | $\gamma_{80}$ | ← RS-CED1 |
| $\gamma_{81}$ | $\gamma_{82}$ | $\gamma_{83}$ | $\gamma_{84}$ | $\gamma_{85}$ | $\gamma_{86}$ | $\gamma_{87}$ | $\gamma_{88}$ | $\gamma_{89}$ | $\gamma_{90}$ | $\gamma_{91}$ | $\gamma_{92}$ | $\gamma_{93}$ | $\gamma_{94}$ | $\gamma_{95}$ | $\gamma_{96}$ | ← RS-CED2 |

$\vdots$

# FIG 8

RS generator matrix (k = 58 octets)

RS information word (k = 58 octets)

RS code word (n octets)

8

8

8

8

8

8

8

· = + 8 =

1. step: RS encoding of raw CED

2. step: Insert word type & IOD$_{nav}$ octets

RS generator matrix elements

□ zero (Galois field element, octet)
■ one (Galois field element, octet)
▨ non-zero (Galois field element, octet)

RS information & RS coded symbols

▨ RS information symbol (Galois field element, octet)

⊠ RS coded symbol (Galois field element, octet)

not RS encoded octets

○ nav. word type & IOD$_{nav}$ (octet)

EP 3 258 291 B1

# FIG 9A

type fields (6 bits): deterministic
IOD$_{nav}$ MSBs (2 bits): repetition
IOD$_{nav}$ LSBs (8 bits): repetition

| $c_1$ | $c_2$ | $c_3$ | $c_4$ | $c_5$ | $c_6$ | $c_7$ | $c_8$ | $c_9$ | $c_{10}$ | $c_{11}$ | $c_{12}$ | $c_{13}$ | $c_{14}$ | $c_{15}$ | $c_{16}$ |
|---|---|---|---|---|---|---|---|---|---|---|---|---|---|---|---|
| $c_{17}$ | $c_{18}$ | $c_{19}$ | $c_{20}$ | $c_{21}$ | $c_{22}$ | $c_{23}$ | $c_{24}$ | $c_{25}$ | $c_{26}$ | $c_{27}$ | $c_{28}$ | $c_{29}$ | $c_{30}$ | $c_{31}$ | $c_{32}$ |
| $c_{33}$ | $c_{34}$ | $c_{35}$ | $c_{36}$ | $c_{37}$ | $c_{38}$ | $c_{39}$ | $c_{40}$ | $c_{41}$ | $c_{42}$ | $c_{43}$ | $c_{44}$ | $c_{45}$ | $c_{46}$ | $c_{47}$ | $c_{48}$ |
| $c_{49}$ | $c_{50}$ | $c_{51}$ | $c_{52}$ | $c_{53}$ | $c_{54}$ | $c_{55}$ | $c_{56}$ | $c_{57}$ | $c_{58}$ | $c_{59}$ | $c_{60}$ | $c_{61}$ | $c_{62}$ | $c_{63}$ | $c_{64}$ |
| $\gamma_{65}$ | $\gamma_{66}$ | $\gamma_{67}$ | $\gamma_{68}$ | $\gamma_{69}$ | $\gamma_{70}$ | $\gamma_{71}$ | $\gamma_{72}$ | $\gamma_{73}$ | $\gamma_{74}$ | $\gamma_{75}$ | $\gamma_{76}$ | $\gamma_{77}$ | $\gamma_{78}$ | $\gamma_{79}$ | $\gamma_{80}$ |
| $\gamma_{81}$ | $\gamma_{82}$ | $\gamma_{83}$ | $\gamma_{84}$ | $\gamma_{85}$ | $\gamma_{86}$ | $\gamma_{87}$ | $\gamma_{88}$ | $\gamma_{89}$ | $\gamma_{90}$ | $\gamma_{91}$ | $\gamma_{92}$ | $\gamma_{93}$ | $\gamma_{94}$ | $\gamma_{95}$ | $\gamma_{96}$ |

⋮

# FIG 9B

type fields (6 bits): deterministic
IOD$_{nav}$ MSBs (2 bits): repetition
IOD$_{nav}$ LSBs (8 bits): repetition

| $c_1$ | $c_2$ | $c_3$ | $c_4$ | $c_5$ | $c_6$ | $c_7$ | $c_8$ | $c_9$ | $c_{10}$ | $c_{11}$ | $c_{12}$ | $c_{13}$ | $c_{14}$ | $c_{15}$ | $c_{16}$ |
|---|---|---|---|---|---|---|---|---|---|---|---|---|---|---|---|
| $c_{17}$ | $c_{18}$ | $c_{19}$ | $c_{20}$ | $c_{21}$ | $c_{22}$ | $c_{23}$ | $c_{24}$ | $c_{25}$ | $c_{26}$ | $c_{27}$ | $c_{28}$ | $c_{29}$ | $c_{30}$ | $c_{31}$ | $c_{32}$ |
| $c_{33}$ | $c_{34}$ | $c_{35}$ | $c_{36}$ | $c_{37}$ | $c_{38}$ | $c_{39}$ | $c_{40}$ | $c_{41}$ | $c_{42}$ | $c_{43}$ | $c_{44}$ | $c_{45}$ | $c_{46}$ | $c_{47}$ | $c_{48}$ |
| $c_{49}$ | $c_{50}$ | $c_{51}$ | $c_{52}$ | $c_{53}$ | $c_{54}$ | $c_{55}$ | $c_{56}$ | $c_{57}$ | $c_{58}$ | $c_{59}$ | $c_{60}$ | $c_{61}$ | $c_{62}$ | $c_{63}$ | $c_{64}$ |
| $\gamma_{65}$ | $\gamma_{66}$ | $\gamma_{67}$ | $\gamma_{68}$ | $\gamma_{69}$ | $\gamma_{70}$ | $\gamma_{71}$ | $\gamma_{72}$ | $\gamma_{73}$ | $\gamma_{74}$ | $\gamma_{75}$ | $\gamma_{76}$ | $\gamma_{77}$ | $\gamma_{78}$ | $\gamma_{79}$ | $\gamma_{80}$ |
| $\gamma_{81}$ | $\gamma_{82}$ | $\gamma_{83}$ | $\gamma_{84}$ | $\gamma_{85}$ | $\gamma_{86}$ | $\gamma_{87}$ | $\gamma_{88}$ | $\gamma_{89}$ | $\gamma_{90}$ | $\gamma_{91}$ | $\gamma_{92}$ | $\gamma_{93}$ | $\gamma_{94}$ | $\gamma_{95}$ | $\gamma_{96}$ |

⋮

| $T_0$ in sec. | I/NAV on E1-B (ICD Issue 1.1) baseline | | I/NAV on E1-B baseline reorded |
|---|---|---|---|
| | all pages shown | only CED pages | only CED pages |
| 1 | CED 2/4 | CED 2/4 | CED 2/4 |
| 3 | CED 4/4 | CED 4/4 | CED 4/4 |
| 5 | GST-UTC | | CED 1/4 |
| 7 | ALM 1 | | CED 3/4 |
| 9 | ALM 2 | | |
| 11 | Int 1 | | |
| 13 | Int 2 | | |
| 15 | Int 3 | | |
| 17 | Int 4 | | |
| 19 | Int 5 | | |
| 21 | CED 1/4 | CED 1/4 | |
| 23 | CED 3/4 | CED 3/4 | |
| 25 | IONO,Flags,BGD | | |
| 27 | Spare | | |
| 29 | Spare | | |
| min. TTD av. TTD 95% TTD max. TTD | | 14.000 s 25.400 s 31.625 s 32.000 s | 8.000 s 22.200 s 31.625 s 32.000 s |

Fig.10

# FIG 11A

| $T_0$ in sec. | I/NAV on E1-B RS2-a | I/NAV on E1-B RS2-b | I/NAV on E1-B RS2-c | I/NAV on E1-B S3 (LDPC) |
|---|---|---|---|---|
| | (RS)-CED pages | (RS)-CED pages | (RS)-CED pages | (LDPC)-CED pages |
| 1 | CED 2/4 | CED 2/4 | CED 2/4 | CED 2/4 |
| 3 | CED 4/4 | CED 4/4 | CED 4/4 | CED 4/4 |
| 5 | CED 1/4 | CED 1/4 | | |
| 7 | CED 3/4 | CED 3/4 | | |
| 9 | RS-CED1 | | | |
| 11 | RS-CED2 | | RS-CED1 | |
| 13 | | | RS-CED2 | |
| 15 | | | | LDPC 1 |
| 17 | | RS-CED1 | | LDPC 2 |
| 19 | | RS-CED2 | | |
| 21 | | | CED 1/4 | CED 1/4 |
| 23 | | | CED 3/4 | CED 3/4 |
| 25 | | | | |
| 27 | | | | |
| 29 | | | | |
| | full | full | full | full |
| min. TTD | 8.000 s | 8.000 s | 14.000 s | 14.000 s |
| av. TTD | 18.600 s | 18.600 s | 18.600 s | 25.400 s |
| 95% TTD | 27.625 s | 27.250 s | 21.750 s | 31.625 s |
| max. TTD | 28.000 s | 28.000 s | 22.000 s | 32.000 s |

| $T_0$ in sec. | I/NAV on E1-B RS2-c (RS)-CED pages | $T_0$ in sec. | I/NAV on E1-B RS2-c (RS)-CED pages | $T_0$ in sec. | I/NAV on E1-B RS2-c (RS)-CED pages |
|---|---|---|---|---|---|
| 1 | CED 2/4 | 31 | RS-CED 3 | 61 | RS-CED 9 |
| 3 | CED 4/4 | 33 | RS-CED 4 | 63 | RS-CED 10 |
| 5 | | 35 | | 65 | |
| 7 | | 37 | | 67 | |
| 9 | | 39 | | 69 | |
| 11 | RS-CED 1 | 41 | RS-CED 5 | 71 | RS-CED 11 |
| 13 | RS-CED 2 | 43 | RS-CED 6 | 73 | RS-CED 12 |
| 15 | | 45 | | 75 | |
| 17 | | 47 | | 77 | |
| 19 | | 49 | | 79 | |
| 21 | CED 1/4 | 51 | RS-CED 7 | 81 | RS-CED 13 |
| 23 | CED 3/4 | 53 | RS-CED 8 | 83 | RS-CED 14 |
| 25 | | 55 | | 85 | |
| 27 | | 57 | | 87 | |
| 29 | | 59 | | 89 | |

# Fig.11B

# FIG 12

| $T_0$ in sec. | I/NAV on E1-B baseline repetition — only CED pages | I/NAV on E1-B RS4-a — (RS)-CED pages | I/NAV on E1-B RS4-b — (RS)-CED pages | I/NAV on E1-B RS4-c — (RS)-CED pages |
|---|---|---|---|---|
| 1 | CED 2/4 | CED 2/4 | CED 2/4 | CED 2/4 |
| 3 | CED 4/4 | CED 4/4 | CED 4/4 | CED 4/4 |
| 5 | CED 1/4 | CED 1/4 | RS-CED 1 | |
| 7 | CED 3/4 | CED 3/4 | RS-CED 2 | RS-CED 1 |
| 9 | | RS-CED 1 | | RS-CED 2 |
| 11 | | RS-CED 2 | | |
| 13 | | RS-CED 3 | | |
| 15 | | RS-CED 4 | | RS-CED 3 |
| 17 | CED 2/4 | | RS-CED 3 | RS-CED 4 |
| 19 | CED 4/4 | | RS-CED 4 | |
| 21 | CED 1/4 | | CED 1/4 | |
| 23 | CED 3/4 | | CED 3/4 | CED 1/4 |
| 25 | | | | CED 3/4 |
| 27 | | | | |
| 29 | | | | |
| min. TTD | full 8.000 s | full 8.000 s | full 8.000 s | full 10.000 s |
| av. TTD | 13.933 s | 15.533 s | 13.933 s | 14.733 s |
| 95% TTD | 17.625 s | 23.625 s | 17.625 s | 17.625 s |
| max. TTD | 18.000 s | 24.000 s | 18.000 s | 18.000 s |

| $T_0$ in sec. | I/NAV on E1-B baseline Red-CED<br>CED + reduced CED pages | I/NAV on E1-B baseline Red-CED reorded<br>CED + reduced CED pages | I/NAV on E1-B RS2-b Red-CED<br>CED + reduced + RS CED pages | I/NAV on E1-B RS2-c Red-CED<br>CED + reduced + RS CED pages | I/NAV on E1-B S3 Red-CED (LDPC)<br>CED + reduced CED + LDPC pages |
|---|---|---|---|---|---|
| 1 | CED 2/4 | CED 2/4 | CED 2/4 | CED 2/4 | CED 2/4 |
| 3 | CED 4/4 | CED 4/4 | CED 4/4 | CED 4/4 | CED 4/4 |
| 5 | | CED 1/4 | CED 1/4 | | |
| 7 | | CED 3/4 | CED 3/4 | | |
| 9 | | | | Red-CED | Red-CED |
| 11 | Red-CED | | | RS-CED 1 | |
| 13 | | Red-CED | Red-CED | RS-CED 2 | LDPC 1 |
| 15 | | | | | LDPC 2 |
| 17 | | | RS-CED 1 | | |
| 19 | | | RS-CED 2 | | |
| 21 | CED 1/4 | | | CED 1/4 | CED 1/4 |
| 23 | CED 3/4 | | | CED 3/4 | CED 3/4 |
| 25 | | Red-CED | Red-CED | Red-CED | |
| 27 | Red-CED | | | | Red-CED |
| 29 | | | | | |

| | I/NAV on E1-B baseline Red-CED | | I/NAV on E1-B baseline Red-CED reorded | | I/NAV on E1-B RS2-b Red-CED | | I/NAV on E1-B RS2-c Red-CED | | I/NAV on E1-B S3 Red-CED (LDPC) | |
|---|---|---|---|---|---|---|---|---|---|---|
| | reduced | full | reduced | full | reduced | full | reduced | full | reduced | full |
| min. TTD | 2.000 s | 14.000 s | 2.000 s | 8.000 s | 2.000 s | 8.000 s | 2.000 s | 8.000 s | 2.000 s | 14.000 s |
| av. TTD | 9.800 s | 25.400 s | 8.600 s | 22.200 s | 8.600 s | 18.600 s | 9.400 s | 18.600 s | 9.800 s | 25.400 s |
| 95% TTD | 18.500 s | 31.625 s | 13.500 s | 31.625 s | 13.500 s | 27.250 s | 15.500 s | 21.750 s | 18.500 s | 31.625 s |
| max. TTD | 20.000 s | 32.000 s | 14.000 s | 32.000 s | 14.000 s | 28.000 s | 14.000 s | 22.000 s | 20.000 s | 32.000 s |

Fig.13

# FIG 14

| full accuracy { | | baseline | 4 pages |
|---|---|---|---|
| | ─✕─ | LDPC | 6 pages |
| | ─▣─ | RS2-b & RS2-c | 6 pages |
| | ─●─ | baseline repetition | 8 pages |
| | ─■─ | RS4-b | 8 pages |
| reduced accuracy { | ─ ─ ─ ─ | baseline + reduced | 6 pages |
| | ─ ✕ ─ | LDPC + reduced | 8 pages |
| | ─ ▣ ─ | RS2-b + reduced & RS2-c + reduced | 8 pages |

AWGN Channel

# FIG 15

| full accuracy | | baseline | 4 pages |
| | | LDPC | 6 pages |
| | | RS2-b | 6 pages |
| | | RS2-c | 6 pages |
| | | baseline repetition | 8 pages |
| | | RS4-b | 8 pages |
| reduced accuracy | | baseline + reduced | 6 pages |
| | | LDPC + reduced | 8 pages |
| | | RS2-b + reduced | 8 pages |
| | | RS2-c + reduced | 8 pages |

Two-State LMS Channel (Urban, 40°, 50 km/h)

CED recovery failure rate

$C/N_0$ in dBHz

# FIG 16

| full accuracy | | | |
|---|---|---|---|
| | ——— | baseline | 4 pages |
| | —×— | LDPC | 6 pages |
| | —☐— | RS2-b | 6 pages |
| | —◇— | RS2-c | 6 pages |
| | —●— | baseline repetition | 8 pages |
| | —■— | RS4-b | 8 pages |
| reduced accuracy | - - - - | baseline + reduced | 6 pages |
| | - -×- - | LDPC + reduced | 8 pages |
| | - -☐- - | RS2-b + reduced | 8 pages |
| | - -◇- - | RS2-c + reduced | 8 pages |

Two-State LMS Channel (Urban, 40°, 5 km/h)

CED recovery failure rate

C/N$_0$ in dBHz

# FIG 17

| full accuracy | | baseline | 4 pages |
| | | baseline reordered | 4 pages |
| | | RS2-b & RS2-c | 6 pages |
| | | baseline repetition | 8 pages |
| | | RS4-b | 8 pages |
| reduced accuracy | | baseline + reduced | 6 pages |
| | | LDPC + reduced | 8 pages |
| | | RS2-b + reduced | 8 pages |
| | | RS2-c + reduced | 8 pages |

# FIG 18

## FIG 19A

epoch of first available symbol in seconds

## FIG 19B

TTD in seconds

# FIG 20A

epoch of first available symbol in seconds

# FIG 20B

TTD in seconds

# FIG 21A

epoch of first available symbol in seconds

# FIG 21B

TTD in seconds

# FIG 22A

epoch of first available symbol in seconds

# FIG 22B

TTD in seconds

# FIG 23A

epoch of first available symbol in seconds

# FIG 23B

TTD in seconds

# FIG 24A

epoch of first available symbol in seconds

# FIG 24B

TTD in seconds

# FIG 25A

# FIG 25B

## FIG 26A

epoch of first available symbol in seconds

## FIG 26B

TTD in seconds

## FIG 27A

epoch of first available symbol in seconds

## FIG 27B

TTD in seconds

## FIG 28A

## FIG 28B

S291

S292

S293

S294

S295

S296

Fig.29

300

301

302

303

304

305

Fig.30

Fig.31

320

321

322

323

324

325

Fig.32

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANGHILERI M. et al.** GNSS Data Message Performance: A New Methodology for its Understanding and Ideas for its Improvement. *International Technical Meeting (ITM) of The Institute of Navigation,* 28 January 2013

- *European GNSS (Galileo) Open Service, Signal In Space, Interface Control Document,* September 2010, 1-206